# EUROPEAN PATENT APPLICATION

(11) **EP 4 486 041 A1**
(43) Date of publication of application: **01.01.2025**
(21) Application number: 23759766.1
(22) Date of filing: 14.02.2023
(51) Int. Cl.: H04W 72/20, H04W 16/26, H04W 84/06

(54) **COMMUNICATION DEVICE, COMMUNICATION METHOD, AND COMMUNICATION SYSTEM**

(30) Priority: 22.02.2022 JP 2022025767
(71) Applicant: Sony Group Corporation, Tokyo 108-0075 (JP)
(72) Inventor: MATSUDA, Hiroki, Tokyo 108-0075 (JP); SHIMEZAWA, Kazuyuki, Tokyo 108-0075 (JP)
(74) Representative: Witte, Weller & Partner Patentanwälte mbB
(86) International application number: PCT/JP2023/004879
(87) International publication number: WO 2023/162763

(57) **Abstract**

A communication device includes a generation unit that generates information regarding scheduling of each of a plurality of links including two or more links of different types, and a transmission unit that transmits information regarding scheduling of each of the plurality of links as one piece of control information to another communication device.

## Description

### Field

The present disclosure relates to a communication device, a communication method, and a communication system.

### Background

In recent years, with increasing demands for communication performance such as wide area coverage and connection stability, studies on a non-terrestrial network (NTN) in which a wireless network is provided from a device floating in the air or space have been started. In a non-terrestrial network, a propagation distance between a base station and a terminal device is not longer than that in a terrestrial network.

### Citation List

### Non Patent Literature

Non Patent Literature 1: R1-1906088, Nokia, Nokia Shanghai Bell, "Consideration on HARQ in NTN", 3GPP RAN1, May, 2019.
Non Patent Literature 2: R1-1813329, NTT DOCOMO, Inc., "Enhanced UL transmission with configured grant for URLLC", 3GPP, RAN1, November, 2018.

### Summary

### Technical Problem

In conventional cellular communication, it is not often assumed that a propagation distance between a base station and a terminal device becomes long. Accordingly, in a case where a conventional communication method is applied to communication of long-distance transmission such as a non-terrestrial network, high communication performance (for example, low delay, high reliability, high throughput, or the like) may not be achieved.

Therefore, the present disclosure proposes a communication device, a communication method, and a communication system capable of achieving high communication performance.

Note that the above problem or object is merely one of a plurality of problems or objects that can be solved or achieved by the plurality of embodiments disclosed in the present description.

### Solution to Problem

In order to solve the above problem, a communication device according to one embodiment of the present disclosure includes: a generation unit that generates information regarding scheduling of each of a plurality of links including two or more links of different types; and a transmission unit that transmits information regarding scheduling of each of the plurality of links as one piece of control information to another communication device.

### Brief Description of Drawings

FIG. 1 is a diagram illustrating an outline of the present embodiment.
FIG. 2 is a diagram illustrating an example of one piece of control information transmitted from a base station to a terminal device.
FIG. 3 is a diagram illustrating a configuration example of a communication system according to an embodiment of the present disclosure.
FIG. 4 is a diagram illustrating an example of a wireless network provided by the communication system.
FIG. 5 is a diagram illustrating an outline of satellite communication provided by the communication system.
FIG. 6 is a diagram illustrating an example of a cell configured by a non-geostationary earth orbiting satellite.
FIG. 7 is a diagram illustrating a configuration example of a management device according to the embodiment of the present disclosure.
FIG. 8 is a diagram illustrating a configuration example of a ground station according to the embodiment of the present disclosure.
FIG. 9 is a diagram illustrating a configuration example of a non-ground station according to the embodiment of the present disclosure.
FIG. 10 is a diagram illustrating a configuration example of a relay station according to the embodiment of the present disclosure.
FIG. 11 is a diagram illustrating a configuration example of a terminal device according to the embodiment of the present disclosure.
FIG. 12 is a sequence diagram illustrating an example of transmission and reception processing (Grant Based).
FIG. 13 is a sequence diagram illustrating an example of transmission and reception processing (Configured Grant).
FIG. 14 is a diagram illustrating a scheduling example 1 according to the present embodiment.
FIG. 15 is a diagram illustrating a scheduling example 2 according to the present embodiment.
FIG. 16 is a diagram illustrating a scheduling example 3 according to the present embodiment.
FIG. 17 is a diagram illustrating a scheduling example 4 according to the present embodiment.
FIG. 18 is a diagram for describing semi-static scheduling.
FIG. 19 is a diagram illustrating link-free scheduling example 1.
FIG. 20 is a diagram illustrating link-free scheduling example 2.

### Description of Embodiments

Hereinafter, an embodiment of the present disclosure will be described in detail with reference to the drawings. Note that, in the following embodiment, the same parts are denoted by the same reference numerals, and redundant description is omitted.

In addition, in the present description and the drawings, a plurality of components having substantially the same functional configuration may be distinguished by attaching different numerals after the same reference numeral. For example, a plurality of configurations having substantially the same functional configuration is distinguished as terminal devices 50₁, 50₂, and 50₃ as necessary. However, in a case where it is not particularly necessary to distinguish each of a plurality of components having substantially the same functional configuration, only the same reference numeral is attached. For example, in a case where it is not necessary to particularly distinguish the terminal devices 50₁, 50₂, and 50₃, they are simply referred to as terminal devices 50.

One or more embodiments (examples and modifications) described below can each be implemented independently. On the other hand, at least some of the plurality of embodiments described below may be appropriately combined with at least some of other embodiments. The plurality of embodiments may include novel features different from each other. Therefore, the plurality of embodiments can contribute to solving different objects or problems, and can exhibit different effects.

Furthermore, the present disclosure will be described according to the following order of items.
1. Outline
1-1. Problem
1-2. Summary of solutions
2. Configuration of communication system
2-1. Configuration example of communication system
2-2. Configuration example of management device
2-3. Configuration example of ground station
2-4. Configuration example of non-ground station
2-5. Configuration example of base station
2-6. Configuration example of relay station
2-7. Configuration example of terminal device
3. Basic operation of communication system
3-1. Transmission and reception processing (Grant Based)
3-2. Transmission and reception processing (Configured Grant)
4. Operation of communication system
4-1. Overview of processing
4-2. Scheduling example
4-3. Details of operation of communication system 1
5. Modification example
6. Conclusion

### <<1. Outline>>

Radio access technology (RAT) such as long term evolution (LTE) and new radio (NR) has been studied in the 3rd generation partnership project (3GPP). LTE and NR are a type of cellular communication technology, and enable mobile communication of a terminal device by arranging a plurality of areas covered by a base station in a cell shape. At this time, a single base station may manage a plurality of cells.

Note that, in the following description, "LTE" includes LTE-A (LTE-Advanced), LTE-A Pro (LTE-Advanced Pro), and EUTRA (Evolved Universal Terrestrial Radio Access). Further, the NR includes NRAT (New Radio Access Technology) and FEUTRA (Further EUTRA). Note that a single base station may manage a plurality of cells. In the following description, a cell corresponding to LTE is referred to as an LTE cell, and a cell corresponding to NR is referred to as an NR cell.

NR is a next-generation radio access method for LTE, and is a radio access technology (RAT) different from LTE. The NR is a radio access technology that can support various use cases including enhanced mobile broadband (eMBB), massive machine type communications (mMTC), and ultra-reliable and low latency communications (URLLC). The NR can implement a technical framework corresponding to usage scenarios, requirement conditions, arrangement scenarios, and the like in these use cases.

Furthermore, in the NR, studies on a non-terrestrial network (NTN) have started due to an increase in demand for wide area coverage, connection stability, and the like. In the non-terrestrial network, a wireless network is scheduled to be provided to a terminal device via a base station other than a ground station, such as a satellite station or an aircraft station. The base station other than a ground station is referred to as a non-ground station or a non-ground base station. A wireless network provided by a ground station is referred to as a terrestrial network (TN). By using the same radio access method for the terrestrial network and the non-terrestrial network, integrated operation of the terrestrial network and the non-terrestrial network becomes possible.

### <1-1. Problem>

In conventional cellular communication, it is not often assumed that a propagation distance between a base station and a terminal device becomes long. For example, in a non-terrestrial network, a base station or a relay station is a non-ground station such as a medium earth orbiting satellite, a low earth orbiting satellite, or a high altitude platform station (HAPS). Therefore, in the non-terrestrial network, a propagation distance between the base station and the terminal device becomes very long as compared with the terrestrial network. When the propagation distance increases, a large propagation delay occurs. For example, when communication with a geostationary earth orbiting satellite is taken into consideration, the maximum round trip delay is 542 ms, which is a very large amount of delay.

In conventional cellular communication, it is not often assumed that a propagation distance between a base station and a terminal device becomes long. Therefore, in a case where a conventional communication technology is simply applied to a communication system in which long-distance transmission occurs, such as a non-terrestrial network, high communication performance (for example, low delay, high reliability, high throughput, or the like) may not be achieved.

For example, it is conceivable to apply a technology for disabling HARQ feedback (disable) or a configured grant technology for performing uplink scheduling in advance to the communication system. However, since these technologies achieve low latency at the expense of communication reliability, even if these technologies are simply applied to the communication system, high communication performance is not necessarily achieved.

### <1-2. Overview of solution>

Accordingly, in the present embodiment, the above problem is solved by the following means.

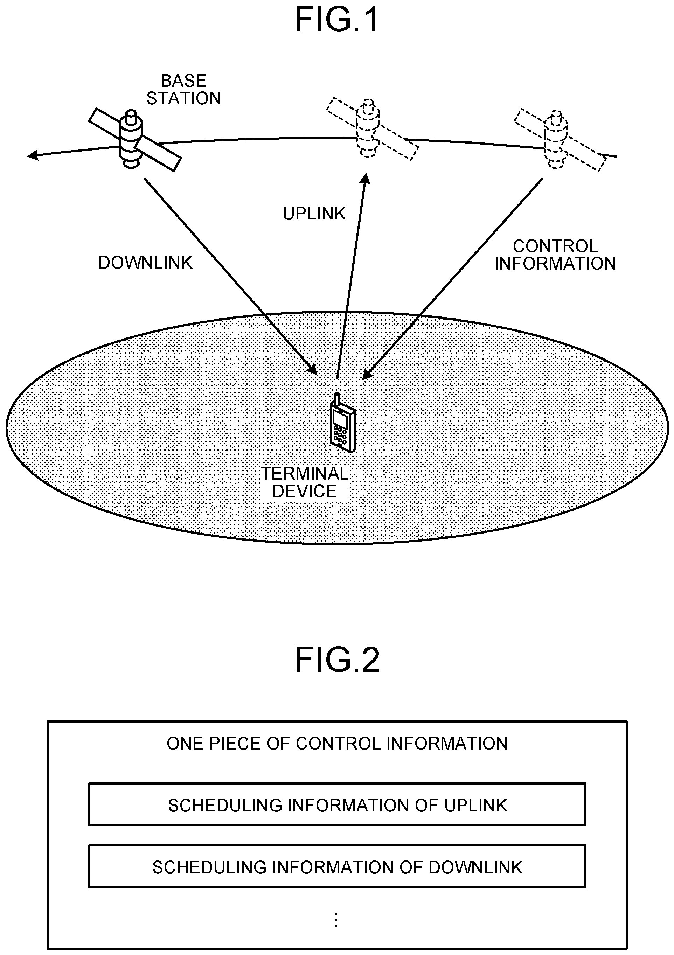

FIG. 1 is a diagram illustrating an outline of the present embodiment. A communication system of the present embodiment includes a base station and a terminal device. In an example of FIG. 1, the base station is a satellite station, but the communication system of the present embodiment is not limited to this example. For example, the base station may be a non-ground station other than a satellite station such as an aircraft station, or may be a ground station that starts a non-ground station (relay station) and communicates with a terminal device.

The base station of the present embodiment generates information (hereinafter, referred to as scheduling information) regarding scheduling of each of a plurality of links with the terminal device. Note that the scheduling information is, for example, information regarding scheduling of a data channel or a control channel. The scheduling information may be control information regarding semi-static scheduling. At this time, the control information regarding the semi-static scheduling may include information regarding semi-persistent scheduling (SPS) or information regarding configured grant (CG).

The plurality of links for which the base station generates schedule information includes two or more links of different types, such as uplink and downlink. The base station transmits the scheduling information of each of the plurality of links to the terminal device as one piece of control information. FIG. 2 is an example of one piece of control information that the base station transmits to the terminal device. In the example of FIG. 2, the one piece of control information includes uplink scheduling information and downlink scheduling information.

The base station and the terminal device perform communication on the basis of the one piece of control information. In the example of FIG. 1, the base station and the terminal device transmit and receive uplink data and transmit and receive downlink data on the basis of uplink and downlink scheduling information included in one piece of control information. At this time, the base station may transmit a reception success/failure response for the uplink data by including the reception success/failure response in the downlink data. The terminal device may also transmit a reception success/failure response for the downlink data by including the reception success/failure response in the following uplink data.

In the case of long-distance transmission such as satellite communication, scheduling delay becomes a major problem. In the present embodiment, the base station simultaneously performs scheduling of a plurality of links of different types, thereby reducing the procedure for giving a notification of control information. As a result, low latency scheduling is achieved, so that the communication system can achieve high communication performance (for example, low-delay communication).

Furthermore, by using the technology of the present embodiment, the base station can perform scheduling more dynamically as compared with the configured grant. As a result, the base station can perform scheduling suitable for channel conditions, so that the communications system can achieve high communication performance (for example, communication with few errors).

In addition, by substituting the reception success/failure response for downlink data with uplink data or substituting the reception success/failure response for uplink data with downlink data, the communication system can achieve more highly reliable communication as compared with a case where the HARQ feedback is disabled.

While the outline of the present embodiment has been described above, the communication system according to the present embodiment will be described in detail below.

### <<2. Configuration of communication system>>

First, a configuration of a communication system 1 of the present embodiment will be described.

The communication system 1 is a cellular communication system using a radio access technology such as LTE or NR, and provides wireless communication via a non-ground station (for example, a satellite station or an aircraft station) to a terminal device on the ground. If the non-ground station is a satellite station, the communication system 1 may be a Bent-pipe (Transparent) type mobile satellite communication system. The radio access method used by the communication system 1 is typically NR but not limited thereto, and may be another radio access method such as LTE, Wideband Code Division Multiple Access (W-CDMA) or Code Division Multiple Access 2000 (cdma 2000).

Note that, in the present embodiment, the ground station (also referred to as a ground base station) refers to a base station (a relay station) installed on the ground. Here, the "ground" is a ground in a broad sense including not only land but also underground, on water, and under water. Note that, in the following description, the description of "ground station" may be replaced with "gateway".

Furthermore, the technology of the present disclosure is applicable not only to communication between the non-ground base station and the terminal device but also to communication between the ground base station and the terminal device. At this time, the ground base station and the terminal device may communicate via a non-ground station such as a satellite station or an aircraft station.

Hereinafter, a configuration of the communication system 1 will be specifically described.

### <2-1. Configuration example of communication system>

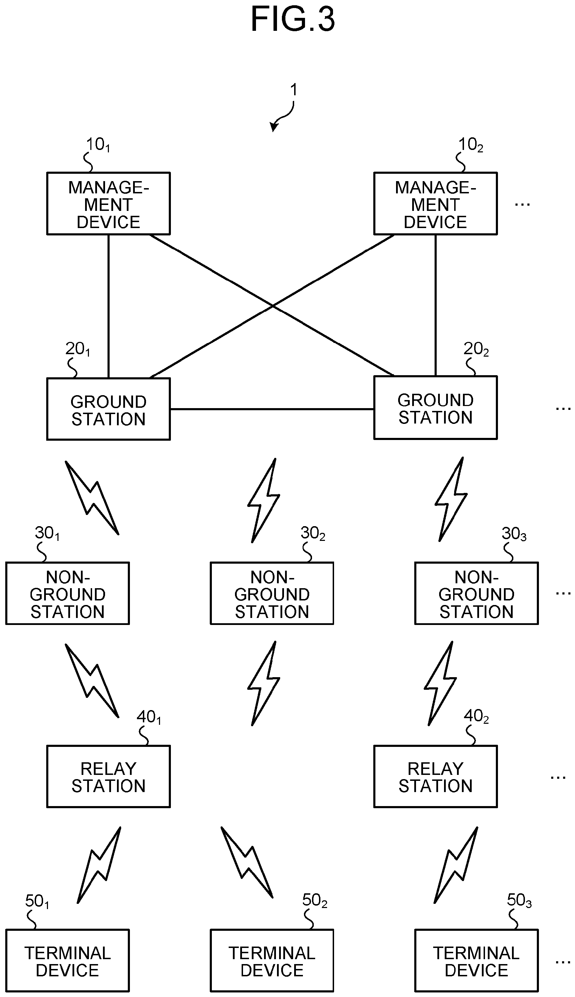

FIG. 3 is a diagram illustrating a configuration example of the communication system 1 according to the embodiment of the present disclosure. The communication system 1 includes a management device 10, a ground station 20, a non-ground station 30, a relay station 40, and a terminal device 50. The communication system 1 provides the user with a wireless network capable of mobile communication by wireless communication devices constituting the communication system 1 operating in cooperation. The wireless network of the present embodiment includes, for example, a radio access network and a core network. Note that, in the present embodiment, the wireless communication device is a device having a wireless communication function, and corresponds to the ground station 20, the non-ground station 30, the relay station 40, and the terminal device 50 in the example of FIG. 3.

The communication system 1 may include a plurality of management devices 10, a plurality of ground stations 20, a plurality of non-ground stations 30, a plurality of relay stations 40, and a plurality of terminal devices 50. In the example of FIG. 3, the communication system 1 includes management devices 10₁ and 10₂ and the like as the management device 10. Further, the communication system 1 includes ground stations 20₁, 20₂ and the like as the ground station 20, and includes non-ground stations 30₁, 30₂, and the like as the non-ground station 30. Furthermore, the communication system 1 includes relay stations 40₂ and 40₂ and the like as the relay station 40, and includes the terminal devices 50₁, 50₂, and 50₃ and the like as the terminal device 50.

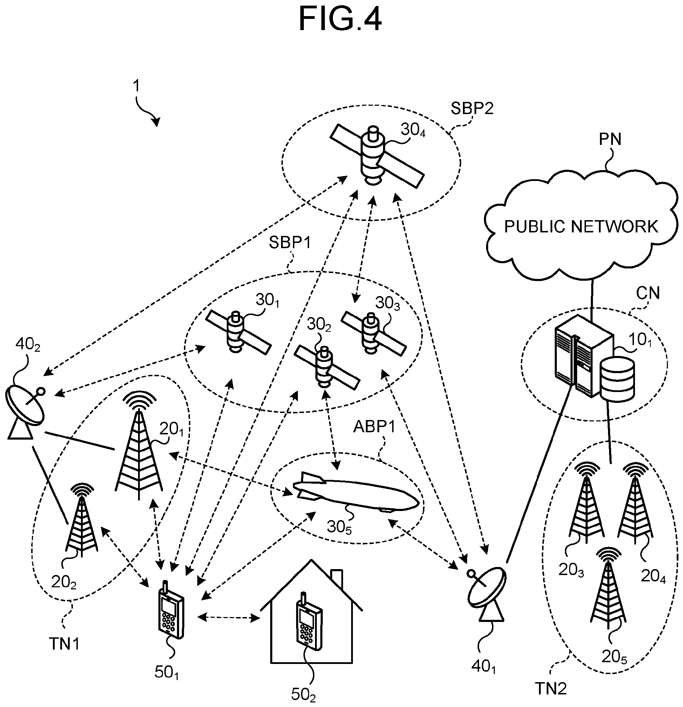

FIG. 4 is a diagram illustrating an example of a wireless network provided by the communication system 1.

The management device 10 is, for example, a device constituting a core network CN. The management device 10 is connected to a public network PN. The management device 10 is connected to the ground station 20 and the non-ground station 30, and enables the terminal device 50 to be connected to the public network PN.

The ground station 20 and the non-ground station 30 are base stations. The ground station 20 is, for example, a ground base station installed in a structure on the ground, and the non-ground station 30 is, for example, a non-ground base station such as a medium earth orbiting satellite, a low earth orbiting satellite, or a high altitude platform station (HAPS). Each of the ground station 20 and the non-ground station 30 constitutes a cell. A cell is an area that covers wireless communication. The cell may be any of a macro cell, a micro cell, a femto cell, and a small cell. Note that the communication system 1 may be configured to manage a plurality of cells by a single base station (satellite station), or may be configured to manage one cell by a plurality of base stations.

In the example of FIG. 4, the ground stations 20₁ and 20₂ constitute a terrestrial network TN1, and the ground stations 20₃, 20₄, and 20₅ constitute a terrestrial network TN2. The terrestrial network TN1 and the terrestrial network TN2 are, for example, networks operated by a wireless communication company such as a telephone company. The terrestrial network TN1 and the terrestrial network TN2 may be operated by different wireless communication carriers, or may be operated by the same wireless communication carrier. The terrestrial network TN1 and the terrestrial network TN2 can be regarded as one terrestrial network.

The terrestrial network TN1 and the terrestrial network TN2 are each connected to a core network. In the example of FIG. 4, the ground station 20 constituting the terrestrial network TN2 is connected to, for example, the core network CN constituted by the management device 10₁ and the like. If the radio access method of the terrestrial network TN2 is LTE, the core network CN is EPC. Further, when the radio access method of the terrestrial network TN2 is NR, the core network CN is 5GC. Of course, the core network CN is not limited to the EPC or the 5GC, and may be a core network of another radio access method. Note that, in the example of FIG. 4, the terrestrial network TN1 is not connected to the core network, but the terrestrial network TN1 may be connected to the core network CN. In addition, the terrestrial network TN1 may be connected to a core network (not illustrated) different from the core network CN.

The core network CN includes a gateway device, a gateway exchange, and the like, and is connected to the public network PN via the gateway device. The public network PN is, for example, a public data network such as the Internet, a regional IP network, or a telephone network (mobile telephone networks, fixed telephone networks, or the like). The gateway device is, for example, a server device connected to the Internet, a regional IP network, or the like. The gateway exchange is, for example, an exchange connected to a telephone network of a telephone company. The management device 10₁ may have a function as a gateway device or a gateway exchange.

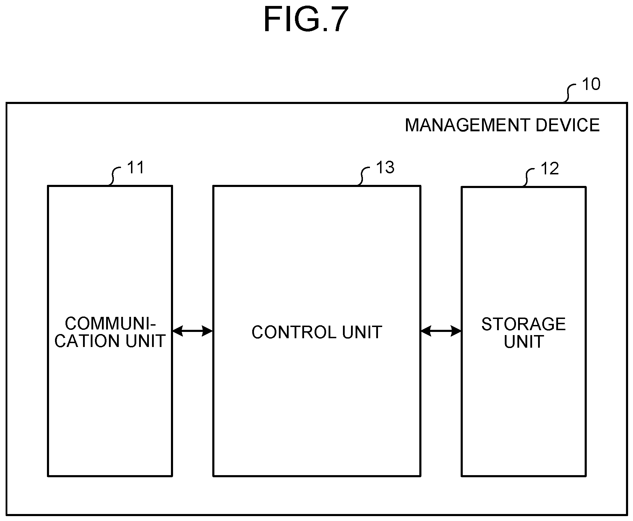

The non-ground station 30 illustrated in FIG. 4 is, for example, a satellite station or an aircraft station. A satellite station group (or a satellite station) constituting a non-terrestrial network is referred to as a space-borne platform. In addition, an aircraft station group (or an aircraft station) constituting a non-terrestrial network is referred to as an airborne platform. In the example of FIG. 7, the non-ground stations 30₁, 30₂, and 30₃ constitute a space-borne platform SBP1, and the non-ground station 30₄ constitutes a space-borne platform SBP2. Further, the non-ground station 30₅ constitutes an airborne platform ABP1.

The non-ground station 30 may be capable of communicating with a terrestrial network or a core network via the relay station 40. Of course, the non-ground station 30 may be able to directly communicate with the terrestrial network or the core network without the relay station 40. Note that the non-ground station 30 may be capable of communicating with the terminal device 50 via the relay station 40, or may be capable of directly communicating with the terminal device 50. In addition, in the non-ground station 30, the relay station 40 non-ground station may be able to directly communicate with each other without passing through the relay station.

The relay station 40 relays communication between a device on the ground and the non-ground station 30. In the example of FIG. 4, the relay station 40₁ relays communication between the ground station 20 and the non-ground station 30, and the relay station 40₂ relays communication between the management device 10 and the non-ground station 30. Note that the ground station 20 may relay communication between the terminal device 50 and the non-ground station 30. In addition, the relay station 40 may be able to communicate with another relay station 40.

The terminal device 50 can communicate with both the ground station and the non-ground station. In the example of FIG. 4, the terminal device 50₁ can communicate with a ground station constituting the terrestrial network TN1. In addition, the terminal device 50₁ can communicate with a non-ground station constituting the space-borne platforms SBP1 and SBP2. Further, the terminal device 50 can also communicate with a non-ground station constituting the airborne platform ABP1. Note that the terminal device 50 may be able to communicate with the relay station 40. In addition, the terminal device 50 may be capable of directly communicating with another terminal device 50. The terminal device 50₁ may be directly communicable with the terminal device 50₂.

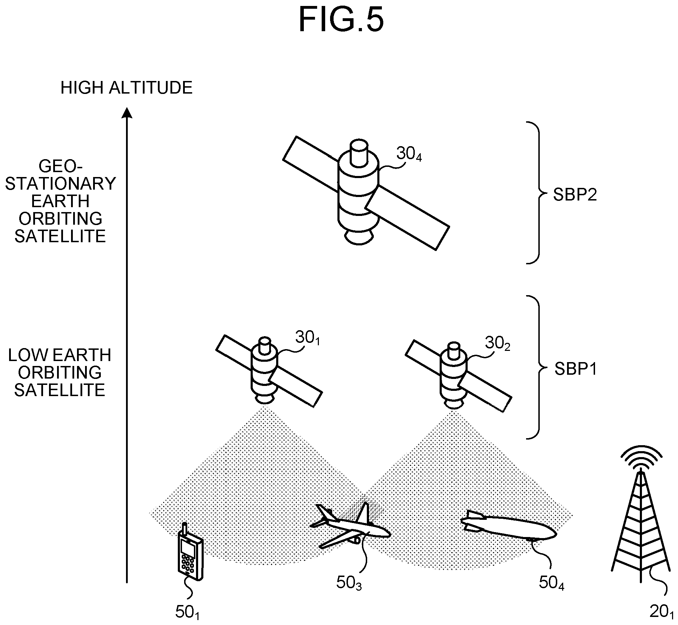

Each device constituting the space-borne platforms SBP1 and SBP2 performs satellite communication with the terminal device 50. Satellite communication is wireless communication between a satellite station and a communication device. FIG. 5 is a diagram illustrating an outline of satellite communication provided by the communication system 1. The satellite station is mainly divided into a geostationary earth orbiting satellite station and a low earth orbiting satellite station.

The geostationary earth orbiting satellite station is located at an altitude of approximately 35786 km and revolves around the earth at the same speed as the rotation speed of the earth. In the example of FIG. 5, the non-ground station 30₄ constituting the space-borne platform SBP2 is a geostationary earth orbiting satellite station. The geostationary earth orbiting satellite station has a relative velocity with the terminal device 50 on the ground of substantially 0, and is observed from the terminal device 50 on the ground as if stationary. The non-ground station 30₄ performs satellite communication with the terminal devices 50₁, 50₃, 50₄, and the like located on the earth.

The low earth orbiting satellite station is a satellite station that orbits at a lower altitude than a geostationary earth orbiting satellite station or a medium earth orbiting satellite station. The low earth orbiting satellite station is, for example, a satellite station located at an altitude of 500 km to 2000 km. In the example of FIG. 5, the non-ground stations 30₂ and 30₂ constituting the space-borne platform SBP1 are low earth orbiting satellite stations. Note that, in FIG. 5, only two non-ground stations 30₁ and 30₂ are illustrated as satellite stations constituting the space-borne platform SBP1. However, actually, among the satellite stations constituting the space-borne platform SBP1, a low earth orbiting satellite constellation is formed by three or more (for example, several tens to several 1000) non-ground stations 30. Unlike the geostationary earth orbiting satellite station, the low earth orbiting satellite station has a relative velocity with the terminal device 50 on the ground, and is observed as if moving from the terminal device 50 on the ground. The non-ground stations 30₁ and 30₂ constitute cells, respectively, and perform satellite communication with terminal devices 50₁, 50₃, 50₄, and the like located on the earth.

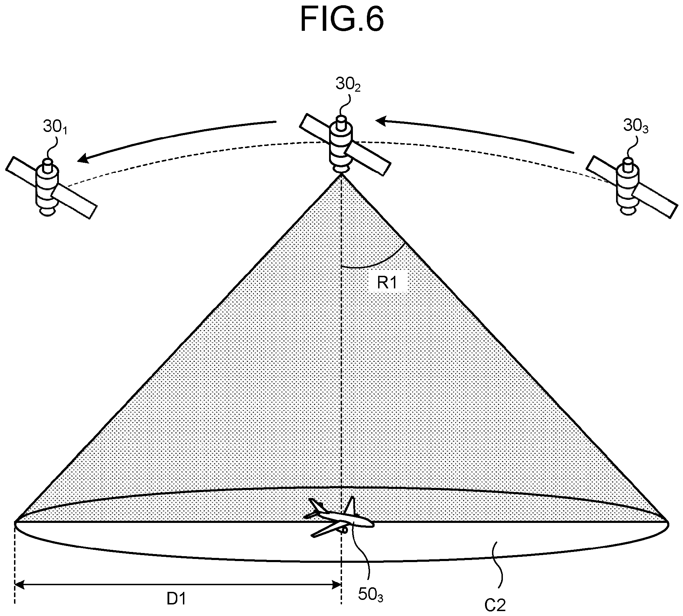

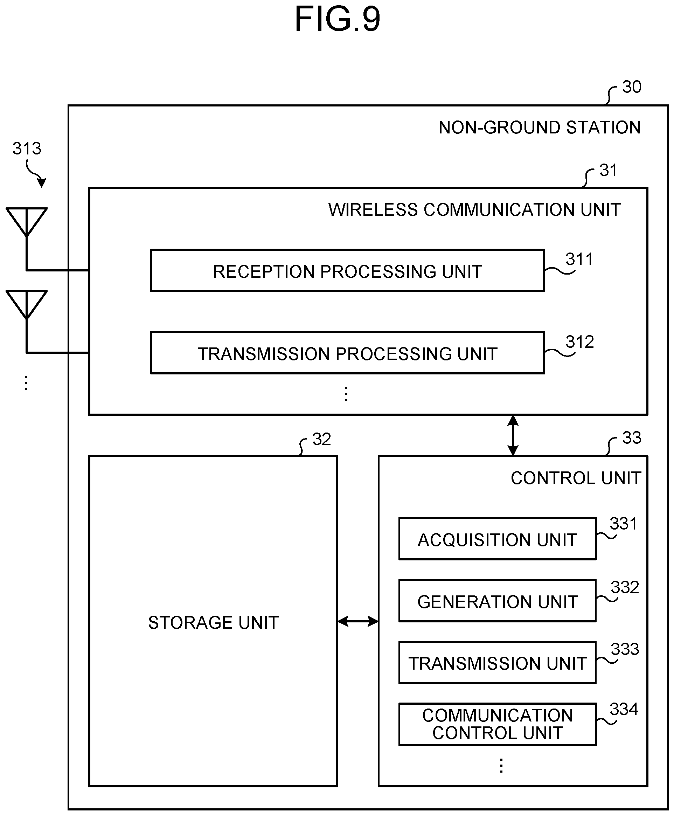

FIG. 6 is a diagram illustrating an example of a cell configured by a non-geostationary earth orbiting satellite. FIG. 6 illustrates a cell C2 formed by the non-ground station 30₂ which is a low earth orbiting satellite station. The satellite station orbiting in a low orbit communicates with the terminal device 50 on the ground with a predetermined directivity on the ground. For example, an angle R1 illustrated in FIG. 9 is 40°. In the case of FIG. 6, a radius D1 of the cell C2 formed by the non-ground station 30₂ is, for example, 1000 km. The low earth orbiting satellite station moves with a constant velocity. When it becomes difficult for the low earth orbiting satellite station to provide satellite communication to the terminal device 50 on the ground, a subsequent low earth orbiting satellite station (neighbor satellite station) provides satellite communication. In the case of the example of FIG. 6, when it becomes difficult for the non-ground station 30₂ to provide satellite communication to the terminal device 50 on the ground, the subsequent non-ground station 30₃ provides satellite communication. Note that the values of the angle R1 and the radius D1 described above are merely examples, and are not limited to the above.

As described above, the medium earth orbiting satellite and the low earth orbiting satellite move on the orbit at a very high speed in the sky, and for example, in the case of a low earth orbiting satellite at an altitude of 600 km, the low earth orbiting satellite moves on the orbit at a speed of 7.6 km/S. A low earth orbiting satellite forms a cell (or beam) having a radius of several 10 km to several 100 km on the ground, but since the cell formed on the ground also moves in accordance with movement of the satellite, handover may be required even if the terminal device on the ground does not move. For example, assuming a case where a cell diameter formed on the ground is 50 km and the terminal device on the ground is not moving, handover occurs in about 6 to 7 seconds.

As described above, the terminal device 50 can perform wireless communication using a non-terrestrial network. Further, the non-ground station 30 of the communication system 1 constitutes a non-terrestrial network. Thus, the communication system 1 can extend the service to the terminal device 50 located in an area that cannot be covered by the terrestrial network. For example, the communication system 1 can provide public safety communication and critical communication to a communication device such as an Internet of Things (IoT) device or a machine type communications (MTC) device. In addition, the use of the non-terrestrial network improves service reliability and recoverability, and hence the communication system 1 can reduce vulnerability of the service to physical attacks or natural disasters. Furthermore, the communication system 1 can implement service connection to aircraft terminal devices such as airplane passengers and drones, and service connection to mobile terminal devices such as ships and trains. In addition, the communication system 1 can achieve provision of A/V content, group communication, an IoT broadcast service, a software download service, a high-efficiency multicast service such as an emergency message, a high-efficiency broadcast service, and the like. Furthermore, the communication system 1 can also achieve traffic offloading between a terrestrial network and a non-terrestrial network. In order to achieve these, it is desirable that the non-terrestrial network provided by the communication system 1 is subjected to operation integration with the terrestrial network provided by the communication system 1 in an upper layer. In addition, the non-terrestrial network provided by the communication system 1 desirably has a radio access method common to that of the terrestrial network provided by the communication system 1.

Note that the devices in the drawings may be considered as devices in the logical sense. That is, a part of the devices in the drawings may be implemented by a virtual machine (VM), Container, Docker, or the like, and these may be implemented on physically the same hardware.

In addition, in the present embodiment, the ground station and the non-ground station can be rephrased as base stations. The satellite station can be rephrased as a relay station. If the satellite station has a function as a base station, the satellite station can be rephrased as a base station.

Note that an LTE base station may be referred to as an evolved node B (eNodeB) or an eNB. In addition, an NR base station may be referred to as a gNodeB or a gNB. Further, in the LTE and the NR, a terminal device (also referred to as a mobile station or a terminal) may be referred to as user equipment (UE). Note that the terminal device is a type of communication device, and is also referred to as a mobile station or a terminal.

In the present embodiment, the concept of the communication device includes not only a portable mobile device (terminal device) such as a mobile terminal but also a device installed in a structure or a mobile object. The structure or the mobile object itself may be regarded as the communication device. In addition, the concept of the communication device includes not only a terminal device but also a base station and a relay station. The communication device is a type of a processing device and an information processing device. Furthermore, the communication device can be rephrased as a transmission device or a reception device.

Hereinafter, a configuration of each device constituting the communication system 1 will be specifically described. Note that the configuration of each device described below is merely an example. The configuration of each device may be different from the configuration described below.

### <2-2. Configuration example of management device>

Next, a configuration of the management device 10 will be described.

The management device 10 is a device that manages a wireless network. For example, the management device 10 is a device constituting a core network. When the core network is the EPC, the management device 10 is, for example, a device having a function as a mobility management entity (MME). Further, when the core network is 5 GC, the management device 10 is, for example, a device having a function as an access and mobility management function (AMF) and/or a session management function (SMF). Of course, the functions of the management device 10 are not limited to the MME, the AMF, and the SMF. For example, when the core network is 5GC, the management device 10 may be a device having a function as a network slice selection function (NSSF), an authentication server function (AUSF), a policy control function (PCF), or a unified data management (UDM). In addition, the management device 10 may be a device having a function as a home subscriber server (HSS).

Note that the management device 10 may have a function of a gateway. For example, when the core network is an EPC, the management device 10 may have a function as a serving gateway (S-GW) or a packet data network gateway (P-GW). In addition, when the core network is 5GC, the management device 10 may have a function as a user plane function (UPF). Note that the management device 10 is not necessarily a device constituting the core network. For example, it is assumed that the core network is a core network of Wideband Code Division Multiple Access (W-CDMA) or Code Division Multiple Access 2000 (cdma 2000). At this time, the management device 10 may be a device that functions as a radio network controller (RNC).

FIG. 7 is a diagram illustrating a configuration example of the management device 10 according to the embodiment of the present disclosure. The management device 10 includes a communication unit 11, a storage unit 12, and a control unit 13. Note that the configuration illustrated in FIG. 7 is a functional configuration, and the hardware configuration may be different from the functional configuration. In addition, the functions of the management device 10 may be implemented in a distributed manner in a plurality of physically separated configurations. For example, the management device 10 may include a plurality of server devices.

The communication unit 11 is a communication interface for communicating with other devices. The communication unit 11 may be a network interface or a device connection interface. For example, the communication unit 11 may be a local area network (LAN) interface such as a network interface card (NIC), or may be a USB interface including a universal serial bus (USB) host controller, a USB port, and the like. In addition, the communication unit 11 may be a wired interface or a wireless interface. The communication unit 11 functions as a communication means of the management device 10. The communication unit 11 communicates with the ground station 20 and the like under the control of the control unit 13.

The storage unit 12 is a data readable/writable storage device such as a dynamic random access memory (DRAM), a static random access memory (SRAM), a flash memory, or a hard disk. The storage unit 12 functions as a storage means of the management device 10. The storage unit 12 stores, for example, a connection state of the terminal device 50. For example, the storage unit 12 stores an RRC state and an ECM state of the terminal device 50. The storage unit 12 may function as a home memory that stores position information of the terminal device 50.

The control unit 13 is a controller that controls each unit of the management device 10. The control unit 13 is implemented by, for example, a processor such as a central processing unit (CPU), a micro processing unit (MPU), or a graphics processing unit (GPU). For example, the control unit 13 is implemented by the processor executing various programs stored in the storage device inside the management device 10 using a random access memory (RAM) or the like as a work area. Note that the control unit 13 may be implemented by an integrated circuit such as an application specific integrated circuit (ASIC) or a field programmable gate array (FPGA). Any of the CPU, the MPU, the GPU, the ASIC, and the FPGA can be regarded as a controller.

### <2-3. Configuration example of ground station>

First, a configuration of the ground station 20 will be described.

The ground station 20 is a wireless communication device that performs wireless communication with the terminal device 50. The ground station 20 may be configured to wirelessly communicate with the terminal device 50 via the non-ground station 30, or may be configured to wirelessly communicate with the terminal device 50 via a relay station on the ground. Of course, the ground station 20 may be configured to wirelessly communicate directly with the terminal device 50.

The ground station 20 is a type of communication device. More specifically, the ground station 20 is a device corresponding to a radio base station (Base Station, Node B, eNB, gNB, or the like) or a wireless access point. The ground station 20 may be a wireless relay station. In addition, the ground station 20 may be an extension device (for example, an optical extension device) called a remote radio head (RRH) or a radio unit (RU). Further, the ground station 20 may be a receiving station such as a field pickup unit (FPU). In addition, the ground station 20 may be an integrated access and backhaul (IAB) donor node or an IAB relay node that provides a wireless access line and a radio backhaul line by time division multiplexing, frequency division multiplexing, or space division multiplexing.

Note that the radio access technology used by the ground station 20 may be a cellular communication technology or a wireless LAN technology. Of course, the radio access technology used by the ground station 20 is not limited thereto, and may be another wireless access technology. For example, the radio access technology used by the ground station 20 may be an LPWA communication technology. Of course, the wireless communication used by the ground station 20 may be radio communication using millimeter waves. In addition, the wireless communication used by the ground station 20 may be wireless communication using radio waves or wireless communication (optical radio) using infrared rays or visible light.

The ground station 20 may be capable of non-orthogonal multiple access (NOMA) communication with the terminal device 50. Here, the NOMA communication is communication using a non-orthogonal resource (transmission, reception, or both). Note that the ground station 20 may be able to perform NOMA communication with another ground station 20. Here, the non-orthogonal resource is a resource of an axis different from an orthogonal resource (time, frequency, and spatial), and is, for example, a radio resource capable of separating different signals by using scrambling, interleaving, a code (for example, a spreading code, a sparse code, or the like), a power difference, and the like.

Note that the ground stations 20 may be able to communicate with each other via a base station-core network interface (for example, S1 Interface or the like). This interface may be either wired or wireless. In addition, the base stations may be capable of communicating with each other via an inter-base station interface (for example, X2 Interface, S1 Interface, and the like). This interface may be either wired or wireless.

Note that the concept of the base station (also referred to as a base station device) includes not only a donor base station but also a relay base station (also referred to as a relay station or a relay station). Further, the concept of the base station includes not only a structure having a function of the base station but also a device installed in the structure.

The structure is, for example, a building such as a high-rise building, a house, a steel tower, a station facility, an airport facility, a harbor facility, an office building, a school building, a hospital, a factory, a commercial facility, or a stadium. Note that the concept of a structure includes not only a building but also a construction (non-building structure) such as a tunnel, a bridge, a dam, a wall, or an iron pillar, and equipment such as a crane, a gate, or a windmill. Further, the concept of the structure includes not only a structure on land (on the ground in a narrow sense) or underground, but also a structure on water such as a platform or a megafloat, and a structure under water such as a marine observation facility. The base station can be rephrased as an information processing device.

The ground station 20 may be a donor station or a relay station (relay station). In addition, the ground station 20 may be a fixed station or a mobile station. The mobile station is a wireless communication device (for example, the base station) configured to be movable. At this time, the ground station 20 may be a device installed in a mobile object or may be a mobile object itself. For example, a relay station having mobility can be regarded as the ground station 20 as a mobile station. In addition, a device that is originally capable of moving, such as a vehicle, a drone, or a smartphone, and has a function of a base station (at least a part of the function of the base station) also corresponds to the ground station 20 as a mobile station.

Here, the mobile object may be a mobile terminal such as a smartphone or a mobile phone. In addition, the mobile object may be a mobile object (for example, a vehicle such as an automobile, a bicycle, a bus, a truck, a motorcycle, a train, or a linear motor car) that moves on land (on the ground in a narrow sense) or a mobile object (for example, the subway) that moves underground (for example, in the tunnel). Further, the mobile object may be a mobile object (for example, a ship such as a passenger ship, a cargo ship, or a hovercraft) that moves over water or a mobile object (for example, a submersible vessel such as a submersible, a submarine, and an unmanned submersible) that moves under water. In addition, the mobile object may be a mobile object (for example, an aircraft such as an airplane, an airship, or a drone) that moves in the atmosphere.

Further, the ground station 20 may be a ground base station installed on the ground. For example, the ground station 20 may be a base station arranged in a structure on the ground, or may be a base station installed in a mobile object moving on the ground. More specifically, the ground station 20 may be an antenna installed in a structure such as a building and a signal processing device connected to the antenna. Of course, the ground station 20 may be a structure or a moving body itself. The "ground" is a ground in a broad sense including not only land (ground in a narrow sense) but also underground, on water, and under water. Note that the ground station 20 is not limited to a ground base station. For example, in a case where the communication system 1 is a satellite communication system, the ground station 20 may be an aircraft station. From the perspective of a satellite station, an aircraft station located on the earth is a ground station.

The size of coverage of the ground station 20 may be large like a macro cell or small like a pico cell. Of course, the size of the coverage of the ground station 20 may be extremely small like a femto cell. In addition, the ground station 20 may have a beamforming capability. In this case, the ground station 20 may form a cell or a service area for each beam. For this purpose, the ground station 20 may be equipped with an antenna array including a plurality of antenna elements, and may be configured to provide an advanced antenna technology typified by multiple input multiple output (MIMO) and beamforming.

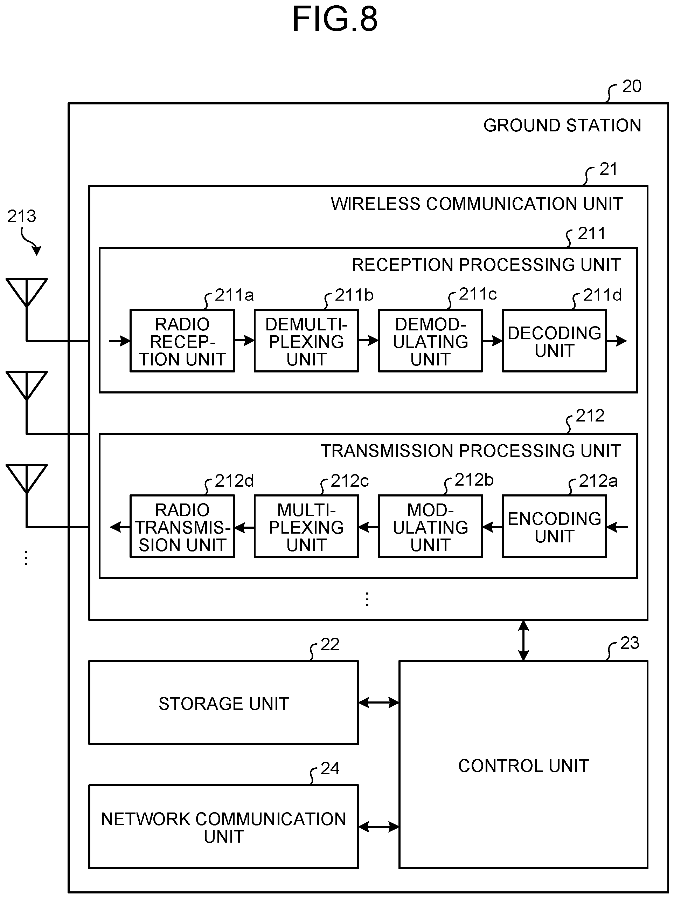

FIG. 8 is a diagram illustrating a configuration example of the ground station 20 according to the embodiment of the present disclosure. The ground station 20 includes a wireless communication unit 21, a storage unit 22, a control unit 23, and a network communication unit 24. Note that the configuration illustrated in FIG. 8 is a functional configuration, and the hardware configuration may be different from the functional configuration. In addition, the functions of the ground station 20 may be implemented in a distributed manner in a plurality of physically separated configurations.

The wireless communication unit 21 is a signal processing unit for wirelessly communicating with other wireless communication devices (for example, the non-ground station 30, the relay station 40, the terminal device 50, and another ground station 20). The wireless communication unit 21 operates under the control of the control unit 23. The wireless communication unit 21 corresponds to one or a plurality of radio access methods. For example, the wireless communication unit 21 supports both the NR and the LTE. The wireless communication unit 21 may be compatible with W-CDMA or cdma 2000 in addition to the NR or the LTE. In addition, the wireless communication unit 21 may support an automatic retransmission technology such as hybrid automatic repeat request (HARQ).

The wireless communication unit 21 includes a reception processing unit 211, a transmission processing unit 212, and an antenna 213. The wireless communication unit 21 may include a plurality of reception processing units 211, a plurality of transmission processing units 212, and a plurality of antennas 213. Note that, in a case where the wireless communication unit 21 supports a plurality of radio access methods, each unit of the wireless communication unit 21 can be configured individually for each radio access method. For example, the reception processing unit 211 and the transmission processing unit 212 may be individually configured by the LTE and the NR. In addition, the antenna 213 may include a plurality of antenna elements (for example, a plurality of patch antennas). In this case, the wireless communication unit 21 may be configured to be beamformable. The wireless communication unit 21 may be configured to be able to perform polarization beamforming using vertically polarized waves (V-polarized waves) and horizontally polarized waves (H-polarized waves).

The reception processing unit 211 processes the uplink signal received via the antenna 213. For example, the reception processing unit 211 performs, on the uplink signal, down-conversion, removal of an unnecessary frequency component, control of an amplification level, quadrature demodulation, conversion to a digital signal, removal of a guard interval (cyclic prefix), extraction of a frequency domain signal by fast Fourier transform, and the like. Then, the reception processing unit 211 demultiplexes an uplink channel such as a physical uplink shared channel (PUSCH) or a physical uplink control channel (PUCCH) and an uplink reference signal from the signals subjected to these processes. Further, the reception processing unit 211 demodulates the reception signal using a modulation method such as binary phase shift keying (BPSK) or quadrature phase shift keying (QPSK) with respect to a modulation symbol of the uplink channel. The modulation method used for demodulation may be 16 quadrature amplitude modulation (QAM), 64 QAM, 256 QAM, or 1024 QAM. In this case, signal points on a constellation do not necessarily have to be equidistant. The constellation may be a non uniform constellation (NUC). Then, the reception processing unit 211 performs a decoding process on the demodulated encoded bits of the uplink channel. Decoded uplink data and uplink control information are output to the control unit 23.

The transmission processing unit 212 performs a process of transmitting downlink control information and downlink data. For example, the transmission processing unit 212 encodes the downlink control information and the downlink data input from the control unit 23 using an encoding method such as block encoding, convolutional encoding, turbo encoding, or the like. Then, the transmission processing unit 212 modulates the coded bits by a predetermined modulation method such as BPSK, QPSK, 16 QAM, 64 QAM, 256 QAM, or 1024 QAM. In this case, signal points on a constellation do not necessarily have to be equidistant. The constellation may be a non-uniform constellation (NUC). Then, the transmission processing unit 212 multiplexes the modulation symbol of each channel and a downlink reference signal and arranges the multiplexed symbols in a predetermined resource element. Then, the transmission processing unit 212 performs various types of signal processing on the multiplexed signal. For example, the transmission processing unit 212 performs processing such as conversion to a frequency domain by fast Fourier transform, addition of a guard interval (cyclic prefix), generation of a baseband digital signal, conversion to an analog signal, quadrature modulation, up-conversion, removal of an extra frequency component, and amplification of power. A signal generated by the transmission processing unit 212 is transmitted from the antenna 213.

The antenna 213 is an antenna device (antenna unit) that mutually converts a current and a radio wave. The antenna 213 may include one antenna element (for example, one patch antenna) or may include a plurality of antenna elements (for example, a plurality of patch antennas). In a case where the antenna 213 includes a plurality of antenna elements, the wireless communication unit 21 may be configured to be beamformable. For example, the wireless communication unit 21 may be configured to generate a directional beam by controlling the directivity of a wireless signal using a plurality of antenna elements. Note that the antenna 213 may be a dual-polarized antenna. In a case where the antenna 213 is a dual-polarized antenna, the wireless communication unit 21 may use vertically polarized waves (V-polarized waves) and horizontally polarized waves (H-polarized waves) in transmitting wireless signals. Then, the wireless communication unit 21 may control the directivity of the wireless signal transmitted using the vertically polarized wave and the horizontally polarized wave. In addition, the wireless communication unit 21 may transmit and receive spatially multiplexed signals via a plurality of layers including a plurality of antenna elements.

The storage unit 22 is a storage means capable of reading and writing data, such as a DRAM, an SRAM, a flash memory, or a hard disk. The storage unit 22 functions as a storage unit of the ground station 20.

The control unit 23 is a controller that controls each unit of the ground station 20. The control unit 23 is implemented by, for example, a processor such as a CPU, an MPU, or a GPU. For example, the control unit 23 is implemented by a processor executing various programs stored in a storage device inside the ground station 20 using a RAM or the like as a work area. Note that the control unit 23 may be implemented by an integrated circuit such as an ASIC or an FPGA. Any of the CPU, the MPU, the GPU, the ASIC, and the FPGA can be regarded as a controller.

Note that the operation of the control unit 23 of the ground station 20 may be the same as the operation of the control unit 33 of the non-ground station 30. At this time, the control unit 23 of the ground station 20 may have a configuration similar to a functional block (described later) of the control unit 33 of the non-ground station 30. Of course, the operation of the control unit 33 of the non-ground station 30 may be the same as the operation of the control unit 23 of the ground station 20.

The network communication unit 24 is a communication interface for communicating with other devices. The network communication unit 24 is, for example, a network interface. For example, the network communication unit 24 is a LAN interface such as an NIC. Note that the network communication unit 24 may be a wired interface or a wireless interface. The network communication unit 24 functions as a communication unit of the relay station 40. The network communication unit 24 communicates with the management device 10, the relay station 40, and the like under the control of the control unit 23.

### <2-4. Configuration example of non-ground station>

Next, a configuration of the non-ground station 30 will be described.

The non-ground station 30 is a base station that provides the terminal device 50 with a function of a base station. Alternatively, the non-ground station 30 is a relay station that relays communication between the ground station 20 and the terminal device 50. The non-ground station 30 may be a satellite station or an aircraft station.

The satellite station is a satellite station capable of floating outside the atmosphere. The satellite station may be a device mounted on a space mobile object such as an artificial satellite, or may be a space mobile object itself. The space mobile object is a mobile object that moves outside the atmosphere. Examples of the space mobile object include artificial celestial bodies such as artificial satellites, spacecrafts, space stations, and probes.

Note that the satellite to be the satellite station may be any of a low earth orbiting (LEO) satellite, a medium earth orbiting (MEO) satellite, a geostationary earth orbiting (GEO) satellite, and a highly elliptical orbiting (HEO) satellite. Of course, the satellite station may be a device mounted on the low earth orbiting satellite, the medium earth orbiting satellite, the geostationary earth orbiting satellite, or the highly elliptical orbiting satellite.

The aircraft station is a wireless communication device capable of floating in the atmosphere, such as an aircraft. The aircraft station may be a device mounted on an aircraft or the like, or may be an aircraft itself. Note that the concept of an aircraft includes not only heavy aircraft such as an airplane and a glider but also light aircraft such as a balloon and an airship. Further, the concept of an aircraft includes not only a heavy aircraft and a light aircraft but also a rotorcraft such as a helicopter and an autogyro. Note that the aircraft station (alternatively, an aircraft on which an aircraft station is mounted) may be an unmanned aerial vehicle such as a drone.

Note that the concept of the unmanned aerial vehicle also includes unmanned aircraft systems (UAS) and tethered UAS. Further, the concept of unmanned aerial vehicles also includes Lighter than Air UAS (LTA) and Heavier than Air UAS (HTA). Other concepts of unmanned aerial vehicles also include High Altitude UAS Platforms (HAPs).

FIG. 9 is a diagram illustrating a configuration example of the non-ground station 30 according to the embodiment of the present disclosure. The non-ground station 30 includes a wireless communication unit 31, a storage unit 32, and a control unit 33. Note that the configuration illustrated in FIG. 9 is a functional configuration, and the hardware configuration may be different from the functional configuration. In addition, the functions of the non-ground station 30 may be implemented in a distributed manner in a plurality of physically separated configurations.

The wireless communication unit 31 is a wireless communication interface that wirelessly communicates with other wireless communication devices (for example, the ground station 20, the relay station 40, the terminal device 50, and another non-ground station 30). The wireless communication unit 31 corresponds to one or a plurality of radio access methods. For example, the wireless communication unit 31 supports both NR and LTE. The wireless communication unit 31 may be compatible with W-CDMA or cdma 3000 in addition to the NR or the LTE. The wireless communication unit 31 includes a reception processing unit 311, a transmission processing unit 312, and an antenna 313. The wireless communication unit 31 may include a plurality of reception processing units 311, a plurality of transmission processing units 312, and a plurality of antennas 313. Note that, in a case where the wireless communication unit 31 supports a plurality of radio access methods, each unit of the wireless communication unit 31 can be configured individually for each radio access method. For example, the reception processing unit 311 and the transmission processing unit 312 may be individually configured by the LTE and the NR. The configurations of the reception processing unit 311, the transmission processing unit 312, and the antenna 313 are similar to the configurations of the reception processing unit 311, the transmission processing unit 312, and the antenna 313 described above. Note that the wireless communication unit 31 may be configured to be beamformable similarly to the wireless communication unit 21. In addition, the wireless communication unit 31 may be configured to be able to transmit and receive spatially multiplexed signals similarly to the wireless communication unit 21.

The storage unit 32 is a storage device capable of reading and writing data, such as a DRAM, an SRAM, a flash memory, or a hard disk. The storage unit 32 functions as a storage unit of the non-ground station 30.

The control unit 33 is a controller that controls each unit of the non-ground station 30. The control unit 33 is implemented by, for example, a processor such as a CPU, an MPU, or a GPU. For example, the control unit 33 is implemented by a processor executing various programs stored in a storage device inside the non-ground station 30 using a RAM or the like as a work area. Note that the control unit 33 may be implemented by an integrated circuit such as an ASIC or an FPGA. Any of the CPU, the MPU, the GPU, the ASIC, and the FPGA can be regarded as a controller.

The control unit 33 includes an acquisition unit 331, a generation unit 332, a transmission unit 333, and a communication control unit 334. Each block (the acquisition unit 331 to the communication control unit 334) constituting the control unit 33 is a functional block indicating a function of the control unit 33. These functional blocks may be software blocks or hardware blocks. For example, each of the functional blocks described above may be one software module implemented by software (including microprograms), or may be one circuit block on a semiconductor chip (die). Of course, each functional block may be one processor or one integrated circuit. The control unit 33 may be configured by a functional unit different from the above-described functional block. A configuration method of the functional block is arbitrary. The operation of each functional block will be described later.

### <2-5. Configuration example of base station>

At least one of the ground station 20 and the non-ground station 30 can operate as the base station of the present embodiment. When the ground station 20 is a base station, the non-ground station 30 can function as a relay station that relays communication between the base station and the terminal device 50. Hereinafter, the base station will be described.

In the present embodiment, the concept of a base station may include a collection of multiple physical or logical devices. For example, in the present embodiment, the base station may be distinguished into a plurality of devices such as a baseband unit (BBU) and a radio unit (RU), and may be interpreted as an assembly of the plurality of devices. Further or alternatively, in the embodiments of the present disclosure, the base station may be either or both of a BBU and an RU.

The BBU and the RU may be connected by a predetermined interface (for example, eCPRI). Further or alternatively, the RU may be referred to as a remote radio unit (RRU) or a radio dot (RD). Further or alternatively, the RU may correspond to a gNB Distributed Unit (gNB-DU) described later. Further or alternatively, the BBU may correspond to a gNB Central Unit (gNB-CU) described below. Further or alternatively, the RU may be a wireless device connected to a gNB-DU described later. The gNB-CU, the gNB-DU, and the RU connected to the gNB-DU may be configured to conform to an open radio access network (OR_AN). Further or alternatively, the RU may be a device integrally formed with the antenna.

An antenna (for example, an antenna integrally formed with an RU) included in the base station may employ an Advanced Antenna System and support MIMO (for example, FD-MIMO) or beamforming. The antenna device in this case may be a layer 1 (Physical layer), and the antenna (for example, an antenna integrally formed with an RU) included in the base station in the advanced antenna system may include, for example, 64 transmission antenna ports and 64 reception antenna ports.

In addition, the antenna mounted on the RU may be an antenna panel including one or more antenna elements, and the RU may be mounted with one or more antenna panels. For example, the RU may be mounted with two types of antenna panels of a horizontally polarized antenna panel and a vertically polarized antenna panel, or two types of antenna panels of a clockwise circularly polarized antenna panel and a counterclockwise circularly polarized antenna panel. In addition, the RU may form and control an independent beam for each antenna panel.

Note that a plurality of base stations may be connected to each other. The one or more base stations may be included in a radio access network (RAN). That is, the base station may be simply referred to as a R_AN, a R_AN node, an access network (AN), or an AN node. The RAN in LTE is referred to as an enhanced universal terrestrial RAN (EUTR_AN). RAN in NR is referred to as NGR_AN. RAN in W-CDMA (UMTS) is referred to as UTRAN.

An LTE base station may be referred to as an evolved node B (eNodeB) or an eNB. That is, the EUTRAN includes one or more eNodeBs (eNBs). In addition, an NR base station may be referred to as a gNodeB or a gNB. That is, the NGR_AN includes one or more gNBs. Furthermore, the EUTR_AN may include a gNB (en-gNB) connected to a core network (EPC) in an LTE communication system (EPS). Similarly, the NGR_AN may include an ng-eNB connected to a core network 5GC in a 5G communications system (5GS).

Note that, in a case where the base station is an eNB or a gNB, the base station may be referred to as 3GPP access. In addition, in a case where the base station is a wireless access point, the base station may be referred to as non-3GPP access.

In addition, the base station may be an optical extension device called a remote radio head (RRH) or a radio unit (RU). In addition, in a case where the base station is a gNB, the base station may be a combination of the gNB CU (Central Unit) and the gNB DU (Distributed Unit) described above, or any one of them.

Here, the gNB CU hosts a plurality of upper layers (for example, RRC, SDAP, and PDCP) in an access stratum for communication with the UE. On the other hand, the gNB-DU hosts a plurality of lower layers (for example, RLC, MAC, and PHY) of the access layer. That is, a part of the message information described above or below may be generated by the gNB CU as RRC signaling (semi-static notification), and the rest may be generated by the gNB-DU as MAC CE or DCI (dynamic notification). Alternatively, in the RRC configuration (part of the message/information described above or below), for example, some configurations such as IE: cellGroupConfig may be generated by the gNB-DU, and the remaining configurations may be generated by the gNB-CU. These configurations may be transmitted and received through an F1 interface described later.

Note that the base station may be configured to be able to communicate with another base station. For example, in a case where a plurality of base stations is eNBs or a combination of an eNB and an en-gNB, the base stations may be connected by an X2 interface. Further or alternatively, when a plurality of base stations is gNBs or a combination of a gn-eNB and a gNB, the devices may be connected by an Xn interface. Further or alternatively, in a case where a plurality of base stations is a combination of a gNB CU (C gNB entral Unit) and a gNB DU (gNB Distributed Unit), the devices may be connected by the above-described F1 interface. A message/information (for example, RRC signaling (RRC signalling), MAC control element (MAC CE), or downlink control information (DCI) may be used) to be described later may be communicated between a plurality of base stations, for example, via X2, Xn, and F1 interfaces.

For example, in some embodiments, the ground station and the non-ground station may both be a gNB combination or an eNB combination, or one may be a gNB and the other may be an eNB combination, or one may be a gNB-CU and the other may be a gNB-DU combination. That is, in a case where the non-ground station is the gNB and the ground station is the eNB, the gNB of the non-ground station (satellite station) may perform connected mobility (handover) or dual connectivity (dual connectivity) by coordination (for example, X2 signaling or Xn signaling) with the eNB of the ground station. Further or alternatively, when the non-ground station is the gNB-DU and the ground station is the gNB-CU, the gNB-DU of the non-ground station (satellite station) may constitute a logical gNB by coordination (for example, F1 signaling) with the gNB-CU of the ground station.

A cell provided by the base station is referred to as a serving cell (Serving cell). The serving cell includes a primary cell (PCell) and a secondary cell (SCell). When dual connectivity is configured for a UE (for example, the terminal device 50), the PCell provided by the MN (Master Node) and zero or one or more SCells may be referred to as a Master Cell Group. Examples of dual connectivity include EUTRA-EUTRA Dual Connectivity, EUTRA-NR Dual Connectivity (ENDC), EUTRA-NR Dual Connectivity with 5GC, NR-EUTRA Dual Connectivity (NEDC), and NR-NR Dual Connectivity (NNDC).

Note that the serving cell may include a PSCell (Primary Secondary Cell or Primary SCG Cell). That is, when dual connectivity is configured for the UE, the PSCell provided by the SN (Secondary Node) and zero or one or more SCells may be referred to as SCG (Secondary Cell Group).

Unless specially configured (for example, PUCCH on SCell), the physical uplink control channel (PUCCH) is transmitted in the PCell and the PSCell, but is not transmitted in the SCell. Further, a radio link failure is also detected in the PCell and the PSCell, but is not detected (may not be detected) in the SCell. As described above, since the PCell and the PSCell have a special role in the serving cell, they are also referred to as a special cell (SpCell).

One downlink component carrier and one uplink component carrier may be associated with one cell. In addition, a system bandwidth corresponding to one cell may be divided into a plurality of bandwidth parts (BWPs). In this case, one or a plurality of BWPs may be configured for the UE, and one BWP may be used for the UE as an active BWP (Active BWP). In addition, radio resources (for example, a frequency band, a numerology (subcarrier spacing), and a slot format (slot configuration)) that can be used by the terminal device 50 may be different for each cell, each component carrier, or each BWP.

### <2-6. Configuration example of relay station>

Next, a configuration of the relay station 40 will be described.

The relay station 40 is a wireless communication device that wirelessly communicates with other communication devices such as the management device 10, the ground station 20, the non-ground station 30, and the terminal device 50. The relay station 40 relays communication between the non-ground station 30 and a communication device (for example, the management device 10, the ground station 20, or the terminal device 50) on the ground. The relay station 40 may be a ground station or a non-ground station. At this time, the relay station 40 may have a configuration similar to that of the ground station 20 or may have a configuration similar to that of the non-ground station 30.

The relay station 40 of the present embodiment is, for example, a layer 3 relay, and is different from a conventional layer 1 relay that only amplifies power of a reception RF signal. Here, the layer 3 relay is a relay that can decode up to the layer 3. Note that the relay station 40 may be a smart repeater. Unlike a conventional layer 1 relay, the smart repeater is a relay capable of controlling a physical layer (PHY) or the like. In addition, descriptions of relay stations appearing in the following description can be replaced with other descriptions indicating relay stations such as relays and relay devices.

Note that the relay station 40 may be a fixed device, a movable device, or a floating device. Furthermore, the size of the coverage of the relay station 40 is not limited to a specific size. For example, the cell covered by the relay station 40 may be a macro cell, a micro cell, or a small cell. Of course, the magnitude of the coverage of the relay station 40 may be extremely small such as a femto cell. In addition, the relay station 40 may have a beamforming capability. In this case, in the relay station 40, a cell or a service area may be formed for each beam.

Further, the relay station 40 is not limited to the mounted device as long as the function of relay is satisfied. For example, the relay station 40 may be mounted on a terminal device such as a smartphone, may be mounted on a vehicle such as an automobile, a train, or a human-powered vehicle, may be mounted on a flying body (floating body) such as a balloon, an airplane, or a drone, may be mounted on equipment such as a traffic light, a sign, or a street light, or may be mounted on a home appliance such as a television, a game machine, an air conditioner, a refrigerator, or a lighting fixture. In addition, the relay station may be provided on an outer wall of a building (for example, Bill). By providing on the outer wall of the building, even when there is a shield between the base station and the terminal device, a signal from the base station can be transferred by the relay station provided on the outer wall of the building and reach the terminal device.

In addition, similarly to the base station described above, the relay station 40 may be a device installed in a mobile object or may be a mobile object itself. As described above, the mobile object may be a mobile terminal such as a smartphone or a mobile phone. In addition, the mobile object may be a mobile object that moves on land (on the ground in a narrow sense) or may be a mobile object that moves underground. Of course, the mobile object may be a mobile object that moves over water or may be a mobile object that moves under water. In addition, the mobile object may be a mobile object that moves inside the atmosphere or may be a mobile object that moves outside the atmosphere. In addition, the relay station 40 may be a ground station device or a non-ground station device. At this time, the relay station 40 may be an aircraft station or a satellite station.

In addition, the relay station 40 may be an aircraft station or an earth station. The aircraft station is a wireless station installed on the ground or a mobile body moving on the ground in order to communicate with an aircraft station. Further, the earth station is a wireless station located on the earth (including air) in order to communicate with a satellite station (space station). The earth station may be a large earth station or a small earth station such as a very small aperture terminal (VSAT).

Note that the earth station may be a VSAT controlled earth station (also referred to as a master station or a HUB station) or a VSAT earth station (also referred to as a slave station). In addition, the earth station may be a wireless station installed in a mobile object moving on the ground. For example, earth stations on board vessels (ESV) can be cited as an earth station mounted on a ship. In addition, the earth station may include an aircraft earth station that is installed in an aircraft (helicopters) and communicates with a satellite station. In addition, the earth station may include an aeronautical earth station that is installed on a mobile object moving on the ground and communicates with the aircraft earth station via a satellite station.

Note that the relay station 40 may be a portable and movable wireless station that communicates with a satellite station or an aircraft station.

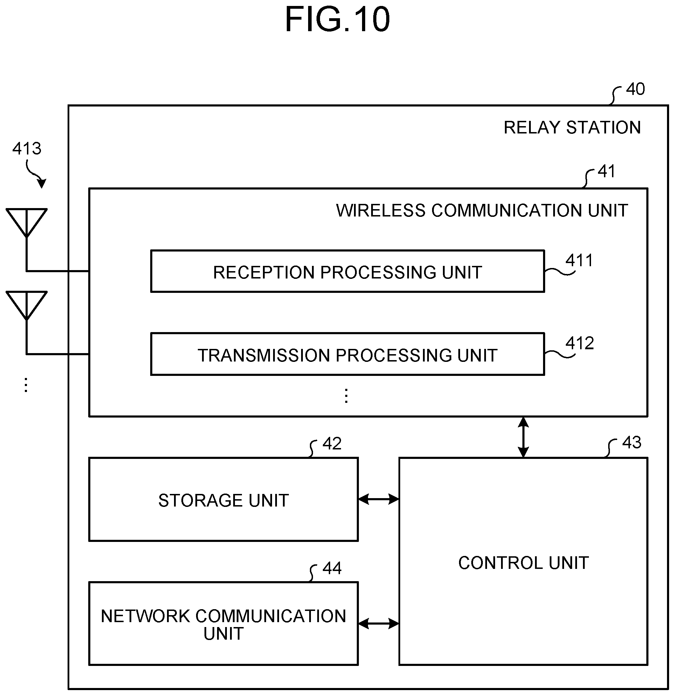

FIG. 10 is a diagram illustrating a configuration example of the relay station 40 according to the embodiment of the present disclosure. The relay station 40 includes a wireless communication unit 41, a storage unit 42, a control unit 43, and a network communication unit 44. Note that the configuration illustrated in FIG. 10 is a functional configuration, and the hardware configuration may be different from the functional configuration. In addition, the functions of the relay station 40 may be implemented in a distributed manner in a plurality of physically separated configurations.

The wireless communication unit 41 is a signal processing unit for wirelessly communicating with other wireless communication devices (for example, the ground station 20, the non-ground station 30, the relay station 40, the terminal device 50, and another relay station 40). The wireless communication unit 41 operates under the control of the control unit 43. The wireless communication unit 41 includes a reception processing unit 411, a transmission processing unit 412, and an antenna 413. The configurations of the wireless communication unit 41, the reception processing unit 411, the transmission processing unit 412, and the antenna 413 may be similar to those of the wireless communication unit 21, the reception processing unit 211, the transmission processing unit 212, and the antenna 213 of the ground station 20. In addition, the wireless communication unit 41 may be configured to be beamformable similarly to the wireless communication unit 21. Furthermore, the wireless communication unit 41 may be configured to be able to transmit and receive spatially multiplexed signals similarly to the wireless communication unit 21.

The storage unit 42 is a storage device capable of reading and writing data, such as a DRAM, an SRAM, a flash memory, or a hard disk. The storage unit 42 functions as a storage means of the relay station 40.

The control unit 43 is a controller that controls each unit of the relay station 40. The control unit 43 is implemented by, for example, a processor such as a CPU, an MPU, or a GPU. For example, the control unit 43 is implemented by a processor executing various programs stored in a storage device inside the relay station 40 using a RAM or the like as a work area. Note that the control unit 43 may be implemented by an integrated circuit such as an ASIC or an FPGA. Any of the CPU, the MPU, the GPU, the ASIC, and the FPGA can be regarded as a controller.

Note that the operation of the control unit 43 of the relay station 40 may be the same as the operation of the control unit 23 of the ground station 20 or the control unit 33 of the non-ground station 30. Conversely, the operation of the control unit 23 of the ground station 20 or the control unit 33 of the non-ground station 30 may be the same as the operation of the control unit 43 of the relay station 40.

The network communication unit 44 is a communication interface for communicating with other devices. The network communication unit 44 is, for example, a network interface. For example, the network communication unit 44 is a LAN interface such as an NIC. Note that the network communication unit 44 may be a wired interface or a wireless interface. The network communication unit 44 functions as a communication unit of the relay station 40. The network communication unit 44 communicates with the management device 10, the ground station 20, and the like under the control of the control unit 43.

### <2-7. Configuration example of terminal device>

Next, a configuration of the terminal device 50 will be described.

The terminal device 50 is a wireless communication device that wirelessly communicates with other communication devices such as the ground station 20 and the non-ground station 30. The terminal device 50 is, for example, a mobile phone, a smart device (smartphone or tablet), a personal digital assistant (PDA), or a personal computer. In addition, the terminal device 50 may be a device such as a business camera provided with a communication function, or may be a motorcycle, a moving relay vehicle, or the like on which a communication device such as a field pickup unit (FPU) is mounted. In addition, the terminal device 50 may be a machine to machine (M2M) device or an Internet of Things (IoT) device.

Note that the terminal device 50 may be able to perform the NOMA communication with the ground station 20. In addition, the terminal device 50 may be able to use an automatic retransmission technology such as HARQ when communicating with the ground station 20. The terminal device 50 may be capable of sidelink communication with another terminal device 50. The terminal device 50 may also be able to use an automatic retransmission technology such as HARQ when performing sidelink communication. Note that the terminal device 50 may also be capable of the NOMA communication in communication (sidelink) with other terminal devices 50. In addition, the terminal device 50 may be able to perform LPWA communication with another communication device (for example, the ground station 20 and another terminal device 50). Further, the wireless communication used by the terminal device 50 may be wireless communication using millimeter waves. Note that the wireless communication (including sidelink communication) used by the terminal device 50 may be wireless communication using radio waves or wireless communication (optical wireless) using infrared rays or visible light.

In addition, the terminal device 50 may be a mobile device. The mobile device is a movable wireless communication device. At this time, the terminal device 50 may be a wireless communication device installed in a mobile object or may be a mobile object itself. For example, the terminal device 50 may be a vehicle that moves on a road such as an automobile, a bus, a truck, or a motorcycle, a vehicle that moves on a rail installed on a track such as a train, or a wireless communication device mounted on the vehicle. Note that the mobile object may be a mobile terminal, or may be a mobile object that moves on land (on the ground in a narrow sense), underground, on water, or under water. In addition, the mobile object may be a mobile object that moves inside the atmosphere, such as a drone or a helicopter, or may be a mobile object that moves outside the atmosphere, such as an artificial satellite.

The terminal device 50 may be simultaneously connected to a plurality of base stations or a plurality of cells to perform communication. For example, in a case where one base station supports a communication area via a plurality of cells (for example, pCell and sCell), the base station and the terminal device 50 may communicate by bundling the plurality of cells and communicate by a carrier aggregation (CA) technology, a dual connectivity (DC) technology, and/or a multi-connectivity (MC) technology. Alternatively, the terminal device 50 and a plurality of base stations may communicate with each other via cells of different base stations by a coordinated transmission and reception (coordinated multi-point transmission and reception (CoMP)) technology.

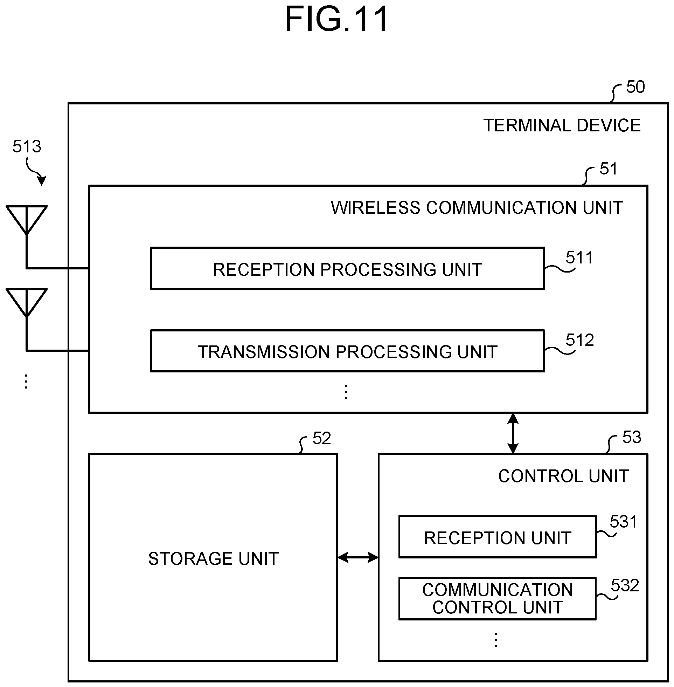

FIG. 11 is a diagram illustrating a configuration example of the terminal device 50 according to the embodiment of the present disclosure. The terminal device 50 includes a wireless communication unit 51, a storage unit 52, and a control unit 53. Note that the configuration illustrated in FIG. 11 is a functional configuration, and the hardware configuration may be different from the functional configuration. In addition, the functions of the terminal device 50 may be implemented in a distributed manner in a plurality of physically separated configurations.

The wireless communication unit 51 is a signal processing unit for wirelessly communicating with other wireless communication devices (for example, the ground station 20, the non-ground station 30, the relay station 40, and another terminal device 50). The wireless communication unit 51 operates under the control of the control unit 53. The wireless communication unit 51 includes a reception processing unit 511, a transmission processing unit 512, and an antenna 513. The configurations of the wireless communication unit 51, the reception processing unit 511, the transmission processing unit 512, and the antenna 513 may be similar to those of the wireless communication unit 21, the reception processing unit 211, the transmission processing unit 212, and the antenna 213 of the ground station 20. In addition, the wireless communication unit 51 may be configured to be beamformable similarly to the wireless communication unit 21. Furthermore, the wireless communication unit 51 may be configured to be able to transmit and receive spatially multiplexed signals similarly to the wireless communication unit 21.

The storage unit 52 is a storage means capable of reading and writing data, such as a DRAM, an SRAM, a flash memory, or a hard disk. The storage unit 52 functions as a storage means of the terminal device 50.

The control unit 53 is a controller that controls each unit of the terminal device 50. The control unit 53 is implemented by, for example, a processor such as a CPU, an MPU, or a GPU. For example, the control unit 53 is implemented by a processor executing various programs stored in a storage device inside the terminal device 50 using a RAM or the like as a work area. Note that the control unit 53 may be implemented by an integrated circuit such as an ASIC or an FPGA. Any of the CPU, the MPU, the GPU, the ASIC, and the FPGA can be regarded as a controller.

The control unit 53 includes a reception unit 531 and a communication control unit 532. Each block (the reception unit 531 to the communication control unit 532) constituting the control unit 53 is a functional block indicating a function of the control unit 53. These functional blocks may be software blocks or hardware blocks. For example, each of the functional blocks described above may be one software module implemented by software (including microprograms), or may be one circuit block on a semiconductor chip (die). Of course, each functional block may be one processor or one integrated circuit. The control unit 53 may be configured by a functional unit different from the above-described functional block. A configuration method of the functional block is arbitrary. The operation of each functional block will be described later.

### <<3. Basic operation of communication system>>

While the configuration of the communication system 1 has been described above, the operation of the communication system 1 will be described. Before describing the operation of the communication system 1 for solving the present problem in detail, the basic operation of the communication system 1 will be described.

Here, data transmission and reception processing will be described by taking transmission (uplink) of data from the terminal device 50 to the base station as an example. The transmission and reception processing is divided into "transmission and reception processing (Grant Based)" and "transmission and reception processing (Configured Grant)". First, the "transmission and reception processing (Grant Based)" will be described.

Note that, in the following description, the base station may be the ground station 20 or the non-ground station 30.

### <3-1. Transmission and reception processing (Grant Based)>

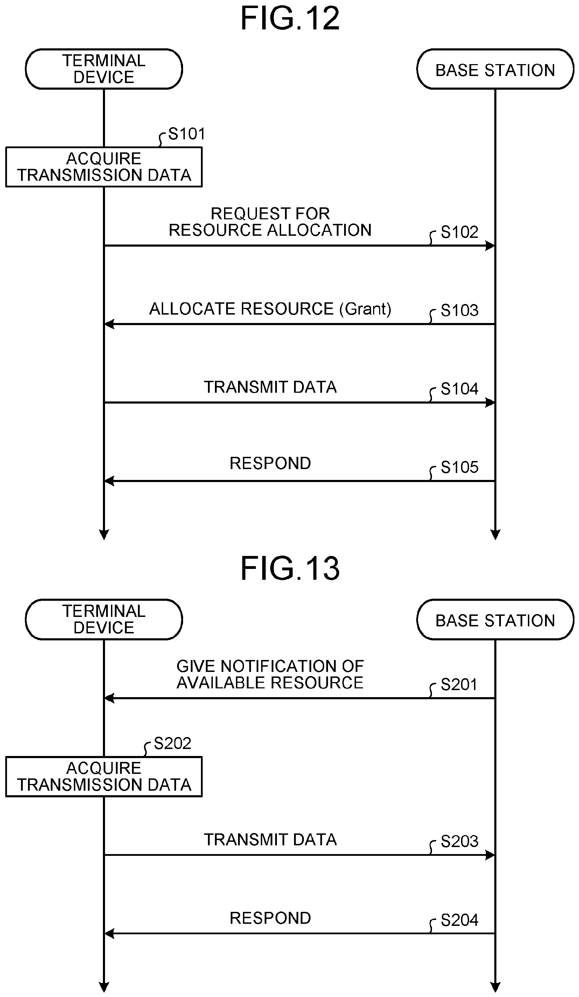

The transmission and reception processing (Grant Based) is processing in which the terminal device 50 receives dynamic resource allocation (Grant) from the base station and transmits data. FIG. 12 is a sequence diagram illustrating an example of transmission and reception processing (Grant Based). Hereinafter, transmission and reception processing (Grant Based) will be described with reference to FIG. 12. The transmission and reception processing (Grant Based) described below is executed, for example, in a case where the terminal device 50 is in a connected state (RRC_CONNECTED) with the base station.

First, the terminal device 50 acquires transmission data (Step S101). For example, the terminal device 50 acquires, as transmission data, data generated as data to be transmitted to another communication device (for example, a base station) by various programs included in the terminal device 50.

When the terminal device 50 acquires the transmission data, the terminal device 50 transmits a resource allocation request to the base station (Step S102).

The base station receives a resource allocation request from the terminal device 50. Then, the base station determines a resource to be allocated to the terminal device 50. Then, the base station transmits information of the resource allocated to the terminal device 50 to the terminal device 50 (Step S103) .

The terminal device 50 receives resource information from the base station and stores the resource information in the storage unit 42. The terminal device 50 transmits data to the base station on the basis of the resource information (Step S104) .

The base station acquires data from the terminal device 50. When the reception is completed, the base station transmits response data (for example, an acknowledgment) to the terminal device 50 (Step S105) . When the transmission of the response data is completed, the base station and the terminal device 50 end the transmission and reception processing (Grant Based).

### <3-2. Transmission and reception processing (Configured Grant)>

Next, the "transmission and reception processing (Configured Grant)" will be described.

The transmission and reception processing (Configured Grant) is a process of transmitting data from the terminal device 50 to the base station using the configured grant transmission. Here, the configured grant transmission indicates that the communication device does not receive dynamic resource allocation (Grant) from another communication device, and the communication device transmits using an appropriate resource from available frequency and time resources instructed in advance from another communication device. That is, the configured grant transmission indicates that data transmission is performed without including a grant in downlink control information (DCI). The configured grant transmission is also referred to as data transmission without grant, grantfree, semi-persistent scheduling, or the like.

For the configured grant transmission, the base station specifies in advance candidates of frequency and time resources that can be selected by the terminal device 50. A main purpose of this is power saving of the terminal device 50 and low delay communication by reducing signaling overheads.

In the grant-based transmission and reception processing, the base station notifies the terminal device 50 of resources used in the uplink and the sidelink. Thus, the terminal device 50 can communicate without causing resource contention with the other terminal devices 50. However, in this method, signaling overhead due to notification occurs.

In the configured grant transmission, the processing of Step S102 and Step S103 in the example of FIG. 12 can be reduced. Therefore, the configured grant transmission that does not perform resource allocation notification is considered as a promising technology candidate in power saving and low-delay communication required in next-generation communication. Note that the transmission resources in the configured grant transmission may be selected from all available bands, or may be selected from among resources designated in advance from the base station.

FIG. 13 is a sequence diagram illustrating an example of transmission and reception processing (Configured Grant). Hereinafter, transmission and reception processing (Configured Grant) will be described with reference to FIG. 13. The transmission and reception processing (Configured Grant) described below is executed, for example, in a case where the terminal device 50 is in a connected state (RRC_CONNECTED) with the base station.

When the terminal device 50 enters the connected state, the base station determines a resource to be allocated to the terminal device 50. Then, the base station transmits information of the resource allocated to the terminal device 50 to the terminal device 50 (Step S201) .

The terminal device 50 receives resource information from the base station and stores the resource information in the storage unit 42. Then, the terminal device 50 acquires the generated transmission data (Step S202). For example, the terminal device 50 acquires, as transmission data, data generated as data to be transmitted to another communication device by various programs included in the terminal device 50.

Then, the terminal device 50 transmits data to the base station on the basis of the resource information (Step S203) .

The base station receives data from the terminal device 50. When the reception is completed, the base station transmits response data (for example, an acknowledgment) to the terminal device 50 (Step S204) . When the transmission of the response data is completed, the base station and the terminal device 50 end the transmission and reception processing (Configured Grant).

### <<4. Operation of communication system>>

While the basic operation of the communication system 1 has been described above, the operation of the communication system 1 that solves the present problem will be described in detail.

### <4-1. Outline of processing>

In the case of long-distance transmission such as satellite communication, scheduling delay is a problem. For example, when communication with a geostationary earth orbiting satellite is considered, the maximum round trip delay is 542 ms. For example, in a case where each of the downlink and the uplink is transmitted once, a delay of 1084 ms is obtained, which is a very large delay amount. As a technique of reducing the delay amount, a technique of disabling HARQ feedback and a configured grant technique can be considered. However, these technologies are technologies that achieve low delay by sacrificing part of reliability. Therefore, even if these techniques are simply applied to the communication system 1, high communication performance is not necessarily achieved.

Therefore, the base station (for example, the generation unit 332 of the non-ground station 30) included in the communication system 1 of the present embodiment generates information (hereinafter, referred to as scheduling information) regarding scheduling of each of a plurality of links with the terminal device 50. The plurality of links for which the base station generates schedule information includes two or more links of different types, such as uplink and downlink. The base station (for example, the transmission unit 333 of the non-ground station 30) transmits the scheduling information of each of the plurality of links to the terminal device 50 as one piece of control information. The reception unit 531 of the terminal device 50 receives the one piece of control information from the base station.

The base station and the terminal device 50 perform communication on the basis of scheduling information included in one piece of control information. For example, the base station (for example, the communication control unit 334 of the non-ground station 30) receives uplink data on the basis of uplink scheduling information included in one piece of control information, and transmits downlink data on the basis of downlink scheduling information included in one piece of control information. Further, the communication control unit 532 of the terminal device 50 transmits uplink data on the basis of uplink scheduling information included in one piece of control information, and receives downlink data on the basis of downlink scheduling information included in one piece of control information.

As described above, in the present embodiment, the base station simultaneously performs scheduling of a plurality of links of different types. Therefore, a procedure for giving a notification of the control information is reduced. As a result, low-delay scheduling is achieved, so that the communication system 1 can achieve high communication performance (for example, low-delay communication).

Note that, in the following description, it is assumed that communication is performed between the base station and the terminal device 50 in the communication system 1. The base station in the following description can be replaced with the non-ground station 30 (non-ground base station) that operates as a communication device. Further, the base station in the following description can be replaced with the ground station 20 (ground base station). That is, the present technology is applicable not only to communication between the non-ground station 30 and the terminal device 50 but also to communication between the ground station 20 and the terminal device 50. At this time, the ground station 20 and the terminal device 50 may perform communication via the non-ground station 30 or may perform communication via another ground station 20. In addition, the ground station 20 and the terminal device 50 may directly communicate with each other.

Further, in the following description, a resource indicates, for example, frequency, time, resource element (including REG, CCE, or CORESET), resource block, bandwidth part, component carrier, symbol, sub-symbol, slot, minislot, subslot, subframe, frame, PRACH occasion, occasion, code, multi-access physical resource, multi-access signature, subcarrier spacing (numerology), or the like. Of course, the resources are not limited to these examples.

Hereinafter, the operation of the communication system 1 will be described in detail.

### <4-2. Scheduling Example>

First, a scheduling example according to the present embodiment will be described.

### (1) Scheduling example 1

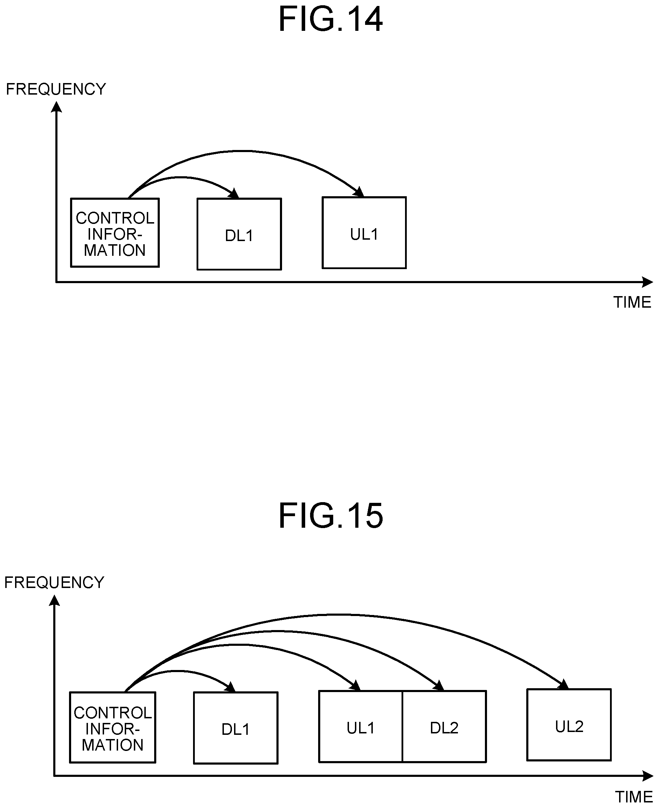

FIG. 14 is a diagram illustrating a scheduling example 1 according to the present embodiment. In the scheduling example 1, the base station includes scheduling information of two links of one downlink (DL1) and one uplink (UL1) in one piece of control information and transmits the one piece of control information to the terminal device 50. In the example of FIG. 14, two time-frequency resources are scheduled, but the two scheduled resources are at the same frequency with different times.

### (2) Scheduling example 2

FIG. 15 is a diagram illustrating a scheduling example 2 according to the present embodiment. In the scheduling example 2, the base station includes scheduling information of two links of two downlinks (DL1 and DL2) and two uplinks (UL1 and UL2) in one piece of control information and transmits the one piece of control information to the terminal device 50. In the example of FIG. 15, two time-frequency resources are scheduled, but all four scheduled resources are at the same frequency with different times.

### (3) Scheduling example 3

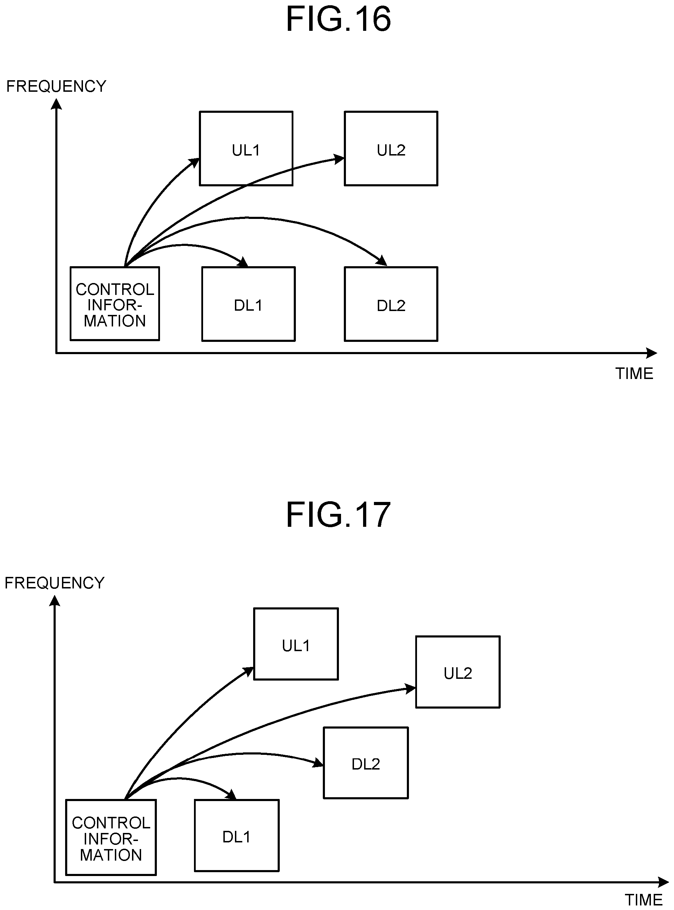

FIG. 16 is a diagram illustrating a scheduling example 3 according to the present embodiment. In the scheduling example 3, the base station includes scheduling information of two links of two downlinks (DL1 and DL2) and two uplinks (UL1 and UL2) in one piece of control information and transmits the one piece of control information to the terminal device 50. In the example of FIG. 16, four time-frequency resources are scheduled, but different times of the same frequency are scheduled for links of the same type, and different frequencies are scheduled for links of different types. In the example of FIG. 16, DL1 and UL1 have different frequencies at the same time, and DL2 and UL2 have different frequencies at the same time.

### (4) Scheduling example 4

FIG. 17 is a diagram illustrating a scheduling example 4 according to the present embodiment. In the scheduling example 4, the base station includes scheduling information of four links of two downlinks (DL1 and DL2) and two uplinks (UL1 and UL2) in one piece of control information and transmits the one piece of control information to the terminal device 50. In the example of FIG. 17, four time-frequency resources are scheduled, but all four resources are at different frequencies at different times.

### <4-3. Details of operation of communication system 1>

While the scheduling example according to the present embodiment has been described above, the operation of the communication system 1 will be described in detail below.

As described above, the base station included in the communication system 1 of the present embodiment transmits the information (hereinafter, referred to as scheduling information) regarding scheduling of each of a plurality of links to the terminal device 50 as one piece of control information. The plurality of links includes two or more links of different types.

### <4-3-1. Scheduling information>

First, the scheduling information will be described. The scheduling information indicates information included in control information such as downlink control information (DCI), for example. Examples of the scheduling information include the following pieces of information (1) to (13). The scheduling information may include information necessary for transmission and reception of data in addition to the following information.
(1) Bandwidth part indicator
(2) Frequency domain resource assignment
(3) Time domain resource assignment
(4) VRB-to-PRB mapping
(5) Rate matching indicator
(6) Modulation and coding scheme
(7) New data indicator
(8) Redundancy version
(9) HARQ process number
(10) Downlink assignment index
(11) Antenna port(s) and number of layers
(12) CBG transmission information (CBGTI)
(13) CBG flushing out information (CBGFI)

Note that the scheduling information may be control information regarding dynamic scheduling (hereinafter, referred to as dynamic scheduling information) or control information regarding semi-static scheduling (hereinafter, referred to as semi-static scheduling information).

### (Dynamic scheduling information)

The dynamic scheduling information is, for example, scheduling information a notification of which is given dynamically such as DCI.

### (Semi-static scheduling information)

The semi-static scheduling information is, for example, scheduling information a notification of which is given semi-statically such as semi-persistent scheduling (SPS) or configured grant (CG). Here, the SPS and the CG may be referred to as configured scheduling (CS). Note that the semi-static scheduling information may be, for example, information for activation or release of semi-static scheduling. In addition, the semi-static scheduling may be, for example, semi-static scheduling in which no link is defined.

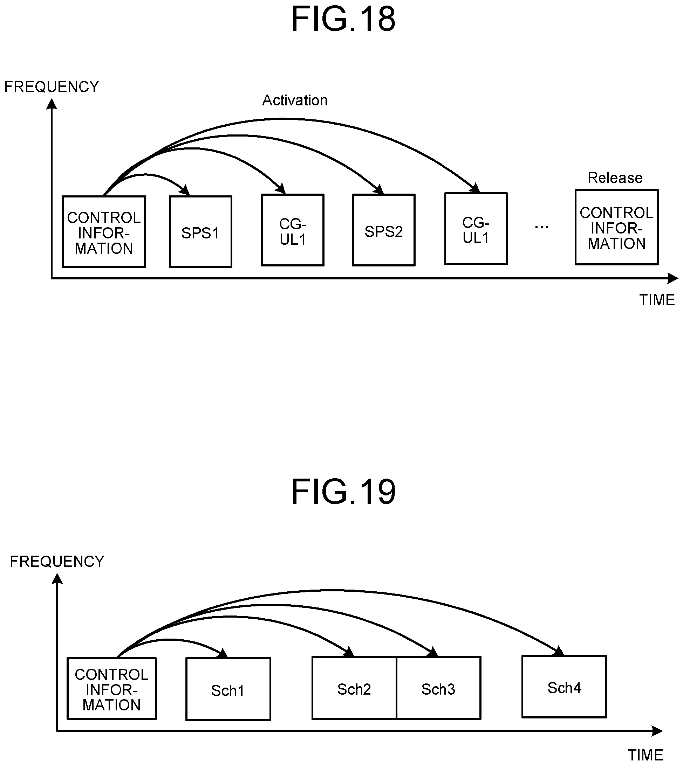

FIG. 18 is a diagram for describing semi-static scheduling. In the example of FIG. 18, the base station includes information for activation of a plurality of pieces of semi-static scheduling information including two SPSs (SPS1 and SPS2) and two CGs (CG-UL1 and CG-UL2) in one piece of control information and transmits the one piece of control information to the terminal device 50. Here, SPS1 and SPS2 may be semi-static scheduling in which no link is defined. Further, the base station includes information for release of the semi-static scheduling in the one piece of control information and transmits the control information to the terminal device 50.

Note that the semi-static scheduling information is not limited to the above example, and may be, for example, resource pool information such as sidelink.

### <4-3-2. Links of different types>

As described above, the plurality of links for which the base station generates schedule information includes two or more links of different types, such as uplink and downlink. Here, examples of the links having different types include the following links (1) to (3).
(1) Examples of links of different types include links such as downlink, uplink, and sidelink. Furthermore, examples of links having different types include links in which a destination and a source are different from those of other links, and links in which a transmission terminal and a reception terminal are different from those of other links (for example, link free described below and the like). For example, in the downlink, the transmission terminal is a base station and the reception terminal is a terminal device; in the uplink, the transmission terminal is a terminal device and the reception terminal is a base station device; and in the sidelink, the transmission terminal is a terminal device and the reception terminal is a terminal device. Therefore, the downlink, the uplink, and the sidelink are links of different types. Note that the plurality of links may include a plurality of links of the same type. For example, the plurality of links may include a plurality of downlinks, a plurality of uplinks, a plurality of sidelinks, and the like.
(2) Examples of links of different types include relay links. Examples of the relay link include an access link between a terminal device and a relay terminal device, and a backhaul link between a relay terminal device and a base station.
(3) Examples of links of different types include non-ground station links. Examples of the non-ground station link include a service link between a ground terminal and a satellite device, a feeder link between a satellite device and a ground gateway, and an intersatellite link between a satellite device and a satellite device.

Note that the plurality of links for which the base station generates the schedule information may be a combination of the links described in (1) to (3) above. That is, the plurality of links for which the base station generates the schedule information may include one or a plurality of links selected from among the plurality of links described in (1) to (3) above.

### <4-3-3. Control information>

The control information transmitted by the base station to the terminal device 50 may be, for example, control information a notification of which is given dynamically such as downlink control information (DCI) or control information a notification of which is given semi-statically such as RRC signaling.

Note that at least one of a plurality of pieces of scheduling information included in the one piece of control information transmitted by the base station to the terminal device 50 may be control information regarding scheduling of a data channel or a control channel.

Here, the data channel or the control channel may be, for example, the following channels (1) to (3).

### (1) Logical channel (Logical channel)

Examples of the logical channel include a BCCH (Broadcast Control Channel), a PCCH (Paging Control Channel), a CCCH (Common Control Channel), a DCCH (Dedicated Control Channel), a DTCH (Dedicated Traffic Channel), and the like.

### (2) Transport channel

Examples of the transport channel include a broadcast channel (BCH), a downlink shared channel (DL-SCH), an uplink shared channel (UL-SCH), a paging channel (PCH), and the like.

### (3) Physical channel

Examples of the physical channel include a physical broadcast channel (PBCH), a physical downlink control channel (PDCCH), a physical uplink control channel (PUCCH), a physical sidelink control channel (PSCCH), a physical downlink shared channel (PDSCH), a physical uplink shared channel (PUSCH), a physical sidelink shared channel (PSSCH), a physical random access channel (PRACH), and the like.

Note that the data channel or the control channel may be a data channel or a control channel for which no link is defined. Examples of a data channel or a control channel for which no link is defined include a transmission data channel, a reception data channel, a data channel for which a source and a destination are defined, and the like.

### <4-3-4. Control information format>

A format of the one piece of control information transmitted by the base station to the terminal device 50 may be a format different from any of control information formats of an uplink scheduling format, a downlink scheduling format, and a sidelink scheduling format. Here, the uplink scheduling format is a control information format including only uplink scheduling information. Further, the downlink scheduling format is a control information format including only downlink scheduling information. Furthermore, the sidelink scheduling format is a control information format including only sidelink scheduling information.

For example, assuming that the uplink scheduling format is a DCI format 0_X, the downlink scheduling format is a DCI format 1_X, and the sidelink scheduling format is a DCI format 2_X, the format of the one piece of control information in the present embodiment may be a DCI format 3_X. Note that the numerical value in the above format is an example, and the numerical value in the actual format may be a numerical value other than this.

Note that some pieces of scheduling information among the plurality of pieces of scheduling information included in the one piece of control information may be common control information regarding a plurality of schedulings of different types of links. In addition, other scheduling information among the plurality of pieces of scheduling information included in the one piece of control information may be independent control information regarding a plurality of schedulings of different types of links.

In addition, the one piece of control information may include the following pieces of information (1) and (2) .

### (1) Information regarding the number of links

The one piece of control information may include information regarding the number of links of the plurality of links to be controlled by the one piece of control information. At this time, a notification field for giving a notification of the number of links may be added to the one piece of control information. Note that the base station may give notification of the information regarding the number of links included in the second control information by the first control information. The terminal device 50 may receive the second control information accordingly. At this time, one control channel may include two pieces of the first control information and the second control information. In addition, the first control information may be included in the first control channel, and the second control information may be included in the second control channel. In this case, the first control channel may include a pointer pointing to the second control channel. This may be referred to as two-stage DCI, for example.

### (2) Information regarding link type

The one piece of control information may include information regarding the type of link of each of the plurality of links to be controlled by the one piece of control information. For example, the one piece of control information may include information giving a notification of which kind of link the scheduling information included in the one piece of control information corresponds to.

For example, when the one piece of control information includes two pieces of scheduling information of downlink and scheduling information of uplink, the base station stores index information corresponding to each of them in the one piece of control information and notifies the terminal device 50 of the index information.

### <4-3-5. Reception success/failure response>

In a case where the base station and the terminal device 50 operate on the basis of scheduling information of a plurality of links (for example, uplink and downlink) of different types included in the one piece of control information, the base station or the terminal device 50 may substitute a reception success/failure response (for example, ACK/NACK) for first link data with second link data.

For example, it is assumed that the base station receives uplink data from the terminal device 50 and transmits downlink data to the terminal device 50 on the basis of a plurality of schedules of which the terminal device 50 is notified by the one piece of control information. In this case, the base station may transmit a reception success/failure response (ACK/NACK) for the uplink data by including the reception success/failure response (ACK/NACK) in the downlink data.

Further, for example, it is assumed that the terminal device 50 receives the downlink data from the base station and transmits the uplink data to the base station on the basis of a plurality of schedules a notification of which is given by the one piece of control information. In this case, the terminal device 50 may transmit a reception success/failure response (ACK/NACK) for the downlink data by including the reception success/failure response (ACK/NACK) in the uplink data.

Note that, in the above example, the base station or the terminal device 50 includes the reception success/failure response in the uplink data or the downlink data, but it is not limited to this example, and for example, the reception success/failure response may be included in another link data. For example, it is assumed that the terminal device 50 receives sidelink reception data from another terminal device and transmits sidelink transmission data to another terminal device 50 on the basis of a plurality of schedules a notification of which is given by the one piece of control information. In this case, the terminal device 50 may transmit a reception success/failure response (ACK/NACK) for the sidelink reception link data by including the reception success/failure response (ACK/NACK) in the sidelink transmission data.

Note that, in the above example, the base station or the terminal device 50 substitutes the reception success/failure response for one piece of first link data with one piece of second link data, but it is not limited to this example, and for example, the reception success/failure response for a plurality of pieces of first link data may be substituted with a single piece of second link data.

For example, it is assumed that the base station receives a plurality of uplink data from the terminal device 50 and transmits downlink data to the terminal device 50 on the basis of a plurality of schedules of which the terminal device 50 is notified by the one piece of control information. In this case, the base station may transmit a reception success/failure response (ACK/NACK) for a plurality of pieces of uplink data by including the reception success/failure response (ACK/NACK) in a single piece of the downlink data.

In addition, it is assumed that the terminal device 50 receives a plurality of pieces of downlink data from the base station and transmits uplink data to the base station on the basis of a plurality of schedules a notification of which is given by the one piece of control information. In this case, the terminal device 50 may transmit a reception success/failure response (ACK/NACK) for a plurality of downlink data by including the reception success/failure response (ACK/NACK) in a single piece of the uplink data.

In addition, the following (1) to (4) can be considered as means for responding whether or not the reception is successful.
(1) The base station or the terminal device 50 transmits the reception success/failure response by including the reception success/failure response in header information such as the MAC CE.
(2) The base station or the terminal device 50 transmits data in a case where the reception succeeds, and gives a notification of NACK information in a case where the reception fails. At this time, the base station or the terminal device 50 may also give a notification of information indicating which data reception has failed.
(3) Reception success/failure information is associated with a sequence of a reference signal and resource information included in the transmission data.
(4) Whether or not data is transmitted or received is associated with whether or not data is successfully received.

### <4-3-6. Link free>

The plurality of links for which the base station generates schedule information may include link free. Here, the link-free is link-flexible communication that does not define a link such as uplink and downlink. In the present embodiment, link-free is also one type of link.

In a case where a plurality of links for which the base station generates schedule information include link-free, the one piece of control information transmitted by the base station to the terminal device 50 may include information of a source and a destination. In addition, in a case where a plurality of links for which the base station generates schedule information include link-free, the one piece of control information may include information indicating whether the link-free schedule information is control information for transmission or control information for reception.

Hereinafter, a link-free scheduling example will be described.

### (1) Link-free scheduling example 1

FIG. 19 is a diagram illustrating link-free scheduling example 1. In the link-free scheduling example 1, the base station includes four link-free (Sch1 to Sch4) scheduling information in the one piece of control information and transmits the one piece of control information to the terminal device 50. In the example of FIG. 19, the four scheduled resources all have the same frequency, but may have different frequencies.

### (2) Link-free scheduling example 2

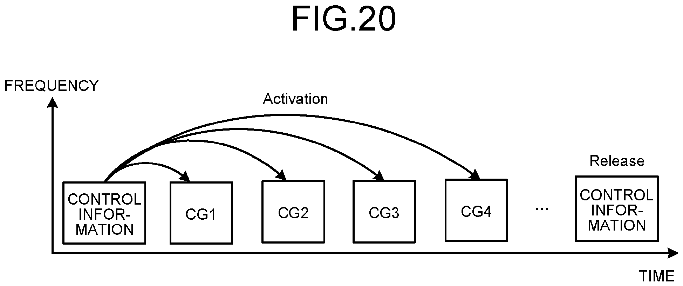

FIG. 20 is a diagram illustrating link-free scheduling example 2. FIG. 20 illustrates an example of semi-static scheduling. In the example of FIG. 20, the base station includes information for activation of a plurality of pieces of semi-static scheduling information including four CGs (CG1 to CG4) in the one piece of control information and transmits the one piece of control information to the terminal device 50. Further, the base station includes the information for release of the semi-static scheduling in the one piece of control information and transmits the control information to the terminal device 50. Note that, in the example of FIG. 20, the plurality of pieces of semi-static scheduling is CG, but the plurality of pieces of semi-static scheduling may include SPS.

Note that, when the base station and the terminal device 50 operate on the basis of a plurality of pieces of link-free scheduling information included in the one piece of control information, the base station or the terminal device 50 may substitute the reception success/failure response (for example, ACK/NACK) for the first link-free data with the second link-free data.

### <4-3-7. Handover example>

In a case where the base station is moving or the terminal device 50 is moving at a high speed, handover may occur frequently. At this time, in a case where the base station simultaneously schedules a plurality of links, it is assumed that handover occurs in the middle of a plurality of scheduled resources. Therefore, in the present embodiment, the base station operates as follows. Note that, in the following description, a handover source base station may be referred to as a source cell before handover, and a handover destination base station may be referred to as a target cell after handover.

In a case where a moving direction of the base station or the terminal device 50 is known in advance, it is considered that the timing at which handover occurs can be predicted, and hence the base station also includes a scheduling of a handover destination in the one piece of control information and notifies the terminal device 50 of the scheduling. The control information may include scheduling information regarding a random access procedure necessary for handover. The scheduling information regarding the random access procedure may include, for example, scheduling information of a handover command (RRC Reconfiguration), scheduling information of a PRACH transmission resource, scheduling information of Random Access Response, scheduling information of RRC Reconfiguration Complete, and the like.

At this time, the base station (Source cell) before the handover may inquire of the base station (Target cell) after the handover as to whether or not the scheduling of the plurality of links can be performed before the handover.

The base station (Target cell) after the handover may respond to the base station (Source cell) before the handover as to whether or not the scheduling of the plurality of links can be performed before the handover. At this time, if the scheduling of the plurality of links can be performed before the handover, the base station (Target cell) after the handover may notify the base station (Source cell) before the handover of the scheduling information of the plurality of links after the handover.

In a case where the scheduling of the plurality of links is performed before the handover, the base station (Source cell) before the handover may provide the base station (Target cell) after the handover with information regarding the scheduling of the plurality of links of which the terminal device 50 is notified. Furthermore, the base station (Source cell) before the handover may predict the timing at which the handover occurs, and may give a notification of release of the semi-persistent scheduling (SPS) and/or the configured grant (CG) before the handover and activation of the SPS and/or the CG after the handover.

At this time, the base station or the management device 10 may estimate a timing of handover occurrence from, for example, position information of the base station or the terminal device 50, movement information of the base station or the terminal device 50, satellite orbit information, time information, received power information such as reference signal received power (RSRP), GPS information, or the like.

### <4-3-8. Case of TDD>

In the case of time division duplex (TDD), the base station or the terminal device 50 may control implementation of the present embodiment according to the TDD configuration. For example, the base station may control scheduling of a plurality of links including different types of links according to the TDD configuration set in the terminal device 50 or the cell.

At this time, scheduling information of the plurality of links of which the base station notifies the terminal device 50 may be controlled to match settings of a downlink slot, an uplink slot, a sidelink slot, and a flexible slot in the TDD configuration. Here, any link may be scheduled in the flexible slot.

Furthermore, in a case where the scheduling information of the plurality of links of which the base station notifies the terminal device 50 does not match the settings of the downlink slot, the uplink slot, the sidelink slot, and the flexible slot in the TDD configuration, the terminal device 50 may not perform the transmission and reception processing in the slot. When the mismatch occurs, the terminal device 50 may notify the base station of information regarding the occurrence of the mismatch.

### <4-3-9. Operation of terminal device>

When receiving the one piece of control information, the terminal device 50 transmits or receives data according to a plurality of pieces of scheduling information.

At this time, the terminal device 50 may notify, in advance, the base station of information indicating whether it is possible to simultaneously perform transmission and reception. The terminal device 50 may notify the base station of this information together with other capability information as capability information of the terminal device 50. When the terminal device 50 notifies the base station that transmission and reception cannot be performed at the same time, the base station may perform scheduling so that the terminal device 50 does not perform transmission and reception at the same time. In addition, the terminal device 50 may operate on the assumption that scheduling information to be simultaneously transmitted and received does not come from the base station. When the terminal device 50 receives scheduling information to be simultaneously transmitted and received from the base station, the terminal device 50 may give priority to either the transmission operation or the reception operation.

In addition, the terminal device 50 may notify, in advance, the base station of information regarding the number of schedulings that can be simultaneously transmitted and received. The terminal device 50 may notify the base station of this information together with other capability information as capability information of the terminal device 50. When the terminal device 50 notifies the base station of the number of schedulings that can be simultaneously transmitted and received, the base station may perform scheduling so that transmission and reception of the terminal device 50 do not exceed the number of schedulings. Further, the terminal device 50 may operate on the assumption that scheduling information exceeding the number of schedulings is not received from the base station. When the terminal device 50 receives scheduling information exceeding the number of schedulings from the base station, the terminal device 50 may give priority to a plurality of schedulings included in the scheduling information and perform a transmission operation or a reception operation. At this time, the terminal device 50 may preferentially operate, for example, either the transmission operation or the reception operation. Alternatively, the terminal device 50 may preferentially execute the transmission operation or the reception operation from information included in a head of the scheduling information.

### <4-3-10. Application of present embodiment>

The present embodiment is also applicable in a carrier aggregation or dual connectivity environment. For example, in a case where communication can be performed between the first carrier and the second carrier, scheduling of a plurality of links across a plurality of carriers may be performed. In addition, for example, the present embodiment may be applied to cross-carrier scheduling. For example, when scheduling of the first carrier and the second carrier is performed on the first carrier, scheduling information of a plurality of links of each of the first carrier and the second carrier may be included in the one piece of control information a notification of which is given on the first carrier.

### <<5. Modification Example>>

The above-described embodiments are examples, and various modifications and applications are possible.

For example, in the above-described embodiment, the base station generates one piece of control information and transmits the one piece of control information to the terminal device 50, but the device that generates and transmits the one piece of control information is not limited to the base station. For example, the terminal device 50 (for example, a master device) may generate one piece of control information and transmit the one piece of control information to the other terminal device 50 (for example, a slave device). The device that receives the one piece of control information is not limited to the terminal device 50, and may be another communication device.

The control device that controls the management device 10, the ground station 20, the non-ground station 30, the relay station 40, and the terminal device 50 of the present embodiment may be implemented by a dedicated computer system or a general-purpose computer system.

For example, a communication program for executing the above-described operation is stored and distributed in a computer-readable recording medium such as an optical disk, a semiconductor memory, a magnetic tape, or a flexible disk. Then, for example, by installing the program in a computer and executing the above-described processing, the control device can be configured. At this time, the control device may be a device (for example, a personal computer) outside the management device 10, the ground station 20, the non-ground station 30, the relay station 40, or the terminal device 50. In addition, the control device may be a device (for example, the control unit 13, the control unit 23, the control unit 33, the control unit 43, or the control unit 53) inside the management device 10, the ground station 20, the non-ground station 30, the relay station 40, or the terminal device 50.

In addition, the communication program may be stored in a disk device included in a server device on a network such as the Internet so that the communication program can be downloaded to a computer. Furthermore, the above-described functions may be implemented by cooperation of an operating system (OS) and application software. In this case, a portion other than the OS may be stored in a medium and distributed, or a portion other than the OS may be stored in a server device, and downloading to a computer, or the like can be performed.

In addition, among the processes described in the above embodiments, all or part of the processes described as being performed automatically can be performed manually, or all or part of the processes described as being performed manually can be performed automatically by a publicly known method. Further, the processing procedure, specific name, and information including various data and parameters illustrated in the document and the drawings can be arbitrarily changed unless otherwise specified. For example, the various types of information depicted in each figure are not limited to the depicted information.

Further, each component of each device depicted in the drawings is functionally conceptual, and is not necessarily physically configured as depicted in the drawings. That is, a specific form of distribution and integration of each device is not limited to the illustrated form, and all or a part thereof can be functionally or physically distributed and integrated in any unit according to various loads, usage conditions, and the like.

Further, the above-described embodiments can be appropriately combined in a region in which the processing contents do not contradict each other. Furthermore, the order of each step illustrated in the flowchart of the above-described embodiment can be appropriately changed.

Furthermore, for example, the present embodiment can be implemented as any configuration constituting a device or a system, for example, a processor as a system large scale integration (LSI) or the like, a module using a plurality of processors or the like, a unit using a plurality of modules or the like, a set obtained by further adding other functions to a unit, or the like (that is, a configuration of a part of the device).

Note that, in the present embodiment, the system means a set of a plurality of components (devices, modules (parts), and the like), and it does not matter whether or not all the components are in the same housing. Therefore, a plurality of devices housed in separate housings and connected via a network and one device in which a plurality of modules is housed in one housing are both systems.

In addition, for example, the present embodiment can employ a configuration of cloud computing in which one function is shared and processed by a plurality of devices in cooperation via a network.

### <<6. Conclusion>>

As described above, according to an embodiment of the present disclosure, a base station (for example, non-ground station 30) generates information (hereinafter, referred to as scheduling information) regarding scheduling of each of a plurality of links with a terminal device 50. The plurality of links for which the base station generates schedule information includes two or more links of different types, such as uplink and downlink. The base station transmits the scheduling information of each of the plurality of links to the terminal device 50 as one piece of control information. The base station and the terminal device perform communication on the basis of scheduling information included in the one piece of control information.

As described above, in the present embodiment, the base station simultaneously performs scheduling of a plurality of links of different types. Therefore, a procedure for giving a notification of the control information is reduced. As a result, low-delay scheduling is achieved, so that the communication system 1 can achieve high communication performance (for example, low-delay communication).

In addition, since the base station can perform scheduling more dynamically than the configured grant, scheduling suitable for the channel state can be performed. As a result, the communication system 1 can improve reliability.

In addition, by replacing the reception success/failure response for downlink data with uplink data and replacing the reception success/failure response for the uplink data with the downlink data, it is possible to provide more highly reliable communication as compared with the case of applying the technology of disabling the HARQ feedback (Disable).

Although the embodiments of the present disclosure have been described above, the technical scope of the present disclosure is not limited to the above-described embodiments as it is, and various modifications can be made without departing from the gist of the present disclosure. In addition, components of different embodiments and modification examples may be appropriately combined.

In addition, the effects in the embodiments described in the present description are merely examples and are not limited, and other effects may be provided.

Note that the present technology can also have the following configurations.
(1) A communication device comprising:
   a generation unit that generates information regarding scheduling of each of a plurality of links including two or more links of different types; and
   a transmission unit that transmits information regarding scheduling of each of the plurality of links as one piece of control information to another communication device.
(2) The communication device according to (1), wherein
   the plurality of links includes at least one or a plurality of links selected from among a downlink, an uplink, a sidelink, or a link-free link.
(3) The communication device according to (1) or (2), wherein
   the plurality of links includes one or a plurality of links selected from among an access link between a terminal device and a relay device and a backhaul link between a relay device and a base station.
(4) The communication device according to any one of (1) to (3), wherein
   the plurality of links includes one or a plurality of links selected from among a service link between a ground terminal and a satellite device, a feeder link between a satellite device and a ground gateway, and an intersatellite link between a satellite device and a satellite device.
(5) The communication device according to any one of (1) to (4), wherein
   at least one of a plurality of pieces of the information regarding scheduling included in the one piece of control information is information regarding scheduling of a data channel or a control channel.
(6) The communication device according to any one of (1) to (5), wherein
   at least one of a plurality of pieces of the information regarding scheduling included in the one piece of control information is control information regarding dynamic scheduling or semi-static scheduling.
(7) The communication device according to (6), wherein
   the one piece of control information includes one or a plurality of pieces of control information regarding semi-static scheduling, and
   the one or a plurality of pieces of control information regarding semi-static scheduling includes information regarding semi-persistent scheduling (SPS) or information regarding configured grant (CG).
(8) The communication device according to (6) or (7), wherein
   the one piece of control information includes one or a plurality of pieces of control information regarding semi-static scheduling, and the one piece of control information includes information indicating activation or release of the semi-static scheduling.
(9) The communication device according to any one of (1) to (8), wherein
   a format of the one piece of control information is a format different from any of a control information format including only uplink scheduling information, a control information format including only downlink scheduling information, and a control information format including only sidelink scheduling information.
(10) The communication device according to any one of (1) to (9), wherein
   the one piece of control information includes information regarding a number of links of the plurality of links to be controlled by the one piece of control information or information regarding a type of link of each of the plurality of links to be controlled by the one piece of control information.
(11) The communication device according to any one of (1) to (10), wherein
   the communication device is a base station that communicates with a terminal device,
   the communication device comprises a communication control unit that receives uplink data from the terminal device and transmits downlink data to the terminal device on a basis of a plurality of schedules of which the terminal device is notified by the one piece of control information, and
   the communication control unit transmits a reception success/failure response for the uplink data by including the reception success/failure response in the downlink data.
(12) The communication device according to any one of (1) to (10), wherein
   the communication device is a base station that communicates with a terminal device,
   the communication device comprises a communication control unit that receives a plurality of pieces of uplink data from the terminal device and transmits downlink data to the terminal device on a basis of a plurality of schedules of which the terminal device is notified by the one piece of control information, and
   the communication control unit transmits a reception success/failure response for the plurality of pieces of uplink data by including the reception success/failure response in a single piece of the downlink data.
(13) The communication device according to any one of (1) to (12), wherein
   the communication device is a base station that communicates with a terminal device,
   the terminal device is configured to perform handover to another base station when a predetermined condition is satisfied, and
   a plurality of pieces of the information regarding scheduling included in the one piece of control information includes information regarding scheduling of a handover destination.
(14) The communication device according to any one of (1) to (13), wherein
   the communication device is a base station that communicates with a terminal device,
   the communication device comprises an acquisition unit that acquires capability information of a terminal device,
   the generation unit generates a plurality of pieces of information regarding scheduling to be included in the one piece of control information to be transmitted to the terminal device on a basis of the capability information of the terminal device, and
   the capability information includes information regarding whether the terminal device is able to simultaneously perform transmission and reception or information regarding a number of schedulings that the terminal device is able to simultaneously transmit and receive.
(15) A communication device comprising:
   a reception unit that receives one piece of control information transmitted from a base station; and
   a communication control unit that performs communication on a basis of the one piece of control information, wherein
   the one piece of control information includes information regarding scheduling of each of a plurality of links including two or more links of different types.
(16) The communication device according to (15), wherein
   the communication control unit receives downlink data from the base station and transmits uplink data to the base station on a basis of a plurality of schedules a notification of which is given by the one piece of control information, and
   the communication control unit transmits a reception success/failure response for the downlink data by including the reception success/failure response in the uplink data.
(17) The communication device according to (15), wherein
   the communication control unit receives a plurality of pieces of downlink data from the base station and transmits uplink data to the base station on a basis of a plurality of schedules a notification of which is given by the one piece of control information, and
   the communication control unit transmits a reception success/failure response for the plurality of pieces of downlink data by including the reception success/failure response in a single piece of the uplink data.
(18) A communication method comprising:
   generating information regarding scheduling of each of a plurality of links including two or more links of different types; and
   transmitting information regarding scheduling of each of the plurality of links as one piece of control information to another communication device.
(19) A communication method comprising:
   receiving one piece of control information transmitted from a base station; and
   performing communication on a basis of the one piece of control information, wherein
   the one piece of control information includes information regarding scheduling of each of a plurality of links including two or more links of different types.
(20) A communication system comprising a base station and a terminal device, wherein
   the base station includes
   a generation unit that generates information regarding scheduling of each of a plurality of links including two or more links of different types, and
   a transmission unit that transmits information regarding scheduling of each of the plurality of links as one piece of control information to another communication device, and
   the terminal device includes
   a reception unit that receives the one piece of control information transmitted from the base station, and
   a communication control unit that performs communication on a basis of the one piece of control information.

### Reference Signs List

1 COMMUNICATION SYSTEM
10 MANAGEMENT DEVICE
20 GROUND STATION
30 NON-GROUND STATION
40 RELAY STATION
50 TERMINAL DEVICE
11 COMMUNICATION UNIT
21, 31, 41, 51 WIRELESS COMMUNICATION UNIT
12, 22, 32, 42, 52 STORAGE UNIT
13, 23, 33, 43, 53 CONTROL UNIT
24, 44 NETWORK COMMUNICATION UNIT
211, 311, 411, 511 RECEPTION PROCESSING UNIT
212, 312, 412, 512 TRANSMISSION PROCESSING UNIT
213, 313, 413, 513 ANTENNA
331 ACQUISITION UNIT
332 GENERATION UNIT
333 TRANSMISSION UNIT
334, 532 COMMUNICATION CONTROL UNIT
531 RECEPTION UNIT

## Claims

1. A communication device comprising:
a generation unit that generates information regarding scheduling of each of a plurality of links including two or more links of different types; and
a transmission unit that transmits information regarding scheduling of each of the plurality of links as one piece of control information to another communication device.

2. The communication device according to claim 1, wherein
the plurality of links includes at least one or a plurality of links selected from among a downlink, an uplink, a sidelink, or a link-free link.

3. The communication device according to claim 1, wherein
the plurality of links includes one or a plurality of links selected from among an access link between a terminal device and a relay device and a backhaul link between a relay device and a base station.

4. The communication device according to claim 1, wherein
the plurality of links includes one or a plurality of links selected from among a service link between a ground terminal and a satellite device, a feeder link between a satellite device and a ground gateway, and an intersatellite link between a satellite device and a satellite device.

5. The communication device according to claim 1, wherein
at least one of a plurality of pieces of the information regarding scheduling included in the one piece of control information is information regarding scheduling of a data channel or a control channel.

6. The communication device according to claim 1, wherein
at least one of a plurality of pieces of the information regarding scheduling included in the one piece of control information is control information regarding dynamic scheduling or semi-static scheduling.

7. The communication device according to claim 6, wherein
the one piece of control information includes one or a plurality of pieces of control information regarding semi-static scheduling, and
the one or a plurality of pieces of control information regarding semi-static scheduling includes information regarding semi-persistent scheduling (SPS) or information regarding configured grant (CG).

8. The communication device according to claim 6, wherein
the one piece of control information includes one or a plurality of pieces of control information regarding semi-static scheduling, and the one piece of control information includes information indicating activation or release of the semi-static scheduling.

9. The communication device according to claim 1, wherein
a format of the one piece of control information is a format different from any of a control information format including only uplink scheduling information, a control information format including only downlink scheduling information, and a control information format including only sidelink scheduling information.

10. The communication device according to claim 1, wherein
the one piece of control information includes information regarding a number of links of the plurality of links to be controlled by the one piece of control information or information regarding a type of link of each of the plurality of links to be controlled by the one piece of control information.

11. The communication device according to claim 1, wherein
the communication device is a base station that communicates with a terminal device,
the communication device comprises a communication control unit that receives uplink data from the terminal device and transmits downlink data to the terminal device on a basis of a plurality of schedules of which the terminal device is notified by the one piece of control information, and
the communication control unit transmits a reception success/failure response for the uplink data by including the reception success/failure response in the downlink data.

12. The communication device according to claim 1, wherein
the communication device is a base station that communicates with a terminal device,
the communication device comprises a communication control unit that receives a plurality of pieces of uplink data from the terminal device and transmits downlink data to the terminal device on a basis of a plurality of schedules of which the terminal device is notified by the one piece of control information, and
the communication control unit transmits a reception success/failure response for the plurality of pieces of uplink data by including the reception success/failure response in a single piece of the downlink data.

13. The communication device according to claim 1, wherein
the communication device is a base station that communicates with a terminal device,
the terminal device is configured to perform handover to another base station when a predetermined condition is satisfied, and
a plurality of pieces of the information regarding scheduling included in the one piece of control information includes information regarding scheduling of a handover destination.

14. The communication device according to claim 1, wherein
the communication device is a base station that communicates with a terminal device,
the communication device comprises an acquisition unit that acquires capability information of a terminal device,
the generation unit generates a plurality of pieces of information regarding scheduling to be included in the one piece of control information to be transmitted to the terminal device on a basis of the capability information of the terminal device, and
the capability information includes information regarding whether the terminal device is able to simultaneously perform transmission and reception or information regarding a number of schedulings that the terminal device is able to simultaneously transmit and receive.

15. A communication device comprising:
a reception unit that receives one piece of control information transmitted from a base station; and
a communication control unit that performs communication on a basis of the one piece of control information, wherein
the one piece of control information includes information regarding scheduling of each of a plurality of links including two or more links of different types.

16. The communication device according to claim 15, wherein
the communication control unit receives downlink data from the base station and transmits uplink data to the base station on a basis of a plurality of schedules a notification of which is given by the one piece of control information, and
the communication control unit transmits a reception success/failure response for the downlink data by including the reception success/failure response in the uplink data.

17. The communication device according to claim 15, wherein
the communication control unit receives a plurality of pieces of downlink data from the base station and transmits uplink data to the base station on a basis of a plurality of schedules a notification of which is given by the one piece of control information, and
the communication control unit transmits a reception success/failure response for the plurality of pieces of downlink data by including the reception success/failure response in a single piece of the uplink data.

18. A communication method comprising:
generating information regarding scheduling of each of a plurality of links including two or more links of different types; and
transmitting information regarding scheduling of each of the plurality of links as one piece of control information to another communication device.

19. A communication method comprising:
receiving one piece of control information transmitted from a base station; and
performing communication on a basis of the one piece of control information, wherein
the one piece of control information includes information regarding scheduling of each of a plurality of links including two or more links of different types.

20. A communication system comprising a base station and a terminal device, wherein
the base station includes
a generation unit that generates information regarding scheduling of each of a plurality of links including two or more links of different types, and
a transmission unit that transmits information regarding scheduling of each of the plurality of links as one piece of control information to another communication device, and
the terminal device includes
a reception unit that receives the one piece of control information transmitted from the base station, and
a communication control unit that performs communication on a basis of the one piece of control information.
